(19) Europäisches Patentamt / European Patent Office / Office européen des brevets

(11) **EP 4 541 065 B1**

(12) **EUROPEAN PATENT SPECIFICATION**

(45) Date of publication and mention
of the grant of the patent:
**06.05.2026 Bulletin 2026/19**

(21) Application number: **23734022.9**

(22) Date of filing: **14.06.2023**

(51) International Patent Classification (IPC):
*H04W 16/18* (2009.01)

(52) Cooperative Patent Classification (CPC):
**H04W 16/18**

(86) International application number:
**PCT/GB2023/051548**

(87) International publication number:
**WO 2023/247928 (28.12.2023 Gazette 2023/52)**

(54) **METHOD, APPARATUS AND COMPUTER PROGRAM PRODUCT FOR USE IN EVALUATING THE COVERAGE PROVIDED BY BASE STATIONS OF A CELLULAR RADIO ACCESS NETWORK**

VERFAHREN, VORRICHTUNG UND COMPUTERPROGRAMMZEUG ZUR VERWENDUNG BEI DER BEWERTUNG DER VON BASISSTATIONEN EINES MOBILFUNKNETZES BEREITGESTELLTEN ABDECKUNG

PROCEDE, DISPOSITIF ET PRODUIT LOGICIEL INFORMATIQUE UTILISES POUR EVALUER LA COUVERTURE FOURNIE PAR LES STATIONS DE BASE D'UN RESEAU D'ACCES RADIO CELLULAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.06.2022 GB 202209029**

(43) Date of publication of application:
**23.04.2025 Bulletin 2025/17**

(73) Proprietor: **Vodafone Group Services Limited Newbury, Berkshire RG14 2FN (GB)**

(72) Inventors:
• **MOHAMED, Ayman Gaber Mohamed**
London Greater London W2 6BY (GB)
• **ZAKI, Mohamed Mahmoud Mohamed**
London Greater London W2 6BY (GB)

(74) Representative: **Boult Wade Tennant LLP Salisbury Square House 8 Salisbury Square London EC4Y 8AP (GB)**

(56) References cited:
**US-A1- 2021 051 484      US-B2- 10 542 330**

• **RAÃOL CHÃ VEZ-SANTIAGO ET AL: "Enhanced efficiency and frequency assignment by optimizing the base stations location in a mobile radio network", WIRELESS NETWORKS ; THE JOURNAL OF MOBILE COMMUNICATION, COMPUTATION AND INFORMATION, KLUWER ACADEMIC PUBLISHERS, DO, vol. 14, no. 4, 4 January 2007 (2007-01-04), pages 531 - 541, XP019617194, ISSN: 1572-8196**

**Description**

TECHNICAL FIELD

The present application relates to inspecting coverage in a cellular radio access network to assess the adequacy of the coverage provided by the radio access network and to suggest one or more changes to improve the adequacy of the coverage. In particular, the present application provides methods, apparatuses and computer program products for use in evaluating the coverage provided by base stations of a cellular radio access network.

BACKGROUND

To provide communications to a variety of user equipment, such as smartphones, dispersed throughout a geographic region, mobile network operators assemble Radio Access Networks (RAN) of base stations such as eNodeBs. Each base station provides one or more cells of a radio communications system within which wireless radio connections can be established between the base stations and user equipment. Each base station may support voice and data communication by one or more Radio Access Technologies (RATs), such as UMTS, LTE and 5G NR. The cells provided by each base station are roughly designated as land areas of coverage arranged as sectors emanating from radio antennas arranged at the base station. User equipment located in the cells in which coverage is provided can gain network access by establishing a radio connection with the base station providing the cell. The Radio Access Network can provide access through a Core Network to other networks such as the public Internet, and can allow voice and data communication with other user equipment in the Radio Access Network.

The Radio Access Network requires careful planning to seek to provide users of user equipment subscribed to the network with coverage that is adequate to meet the overall demand for voice and data communications in the geographic area. Network planning requires the provision of base stations at selected sites located in the geographic region, and also consideration given to the configuration of the base station antenna in terms of pointing direction, tilt and power, as well as the cellular bands and Radio Access Technologies provided. The planning must take into account anticipated or actual demand, topography of the geographic region in terms of natural and man made features, fading and interference, and other factors. The planning must seek to provide to users a connection that meets certain quality of service levels in terms of data rate, delay and connection stability. Network planning that leads to under-provisioning of a radio access network that provides coverage insufficient to meet demand can lead to poor connection stability and data rates below an expected service level, and even signal voids or black spots, leading to a poor user experience. Similarly, network planning that leads to over-provisioning can lead to a sub-optimal deployment of resources.

Network planning using a manual review of the coverage map and signal strength information takes into account only the ability of user equipment within the geographic region to establish a connection to a base station, and does not take into account network traffic or other considerations. Field investigations and error reports may be used to build an ad hoc picture of the actual experience of users of user equipment in the field. However, this is time consuming and does not readily enable the optimisation of the network to meet the needs of the user. Mechanisms to aid the identification of underprovisioning or sub-optimal network planning can greatly facilitate the improvement of the network to meet user demand.

Publication R. Cháves-Santiago et al "Enhanced efficiency and frequency assignment by optimizing the base stations location in a mobile radio network", Wireless Networks (4 January 2007) discloses discretizing traffic such that the optimization of vase station locations can be represented through vector quantization. Publication R. Cháves-Santiago et al "Enhanced efficiency and frequency assignment by optimizing the base stations location in a mobile radio network", Wireless Networks (4 January 2007) discloses discretizing traffic such that the optimization of vase station locations can be represented through vector quantization. Publication US10542330B2 discloses a method for automatic adaptive network planning, wherein for each location and for each site a likelihood of the network coverage goals being realized is calculated using a generated wireless network coverage map.

It is in the above context that the present disclosure has been devised.

BRIEF SUMMARY

The invention is defined by the independent claims. Advantageous embodiments of the invention are given in the sub-claims. Viewed from one aspect, the present disclosure provides a method for use in evaluating the coverage provided by base stations of a cellular radio access network, including receiving, for cells provided by base stations of a radio access network, data representative of a connection metric reported by each base station for user equipment having an established connection to one of the base stations, the connection metric being collected over an operation period of the radio access network for all connections, the collected connection metric data for each base station being indicative of a distribution of connections throughout the coverage area for that base station; generating, for each cell, data representative of a normalised frequency distribution of the connection metric between the base station and the user equipment connected to the base station over the operation period, the normalised frequency distribution representing a probability density function for the connection metric; determining, for each cell, a set of connection diagnostic features from the probability density function of the connection metric, the connection diagnostic features being selected to indicate characteristics of the distribution of the connection metric in the coverage area provided by the cells; using an unsupervised machine learning algorithm, clustering cells based on the determined connection diagnostic features for the cells into clusters of similar distributions of the connection metric, the data representative of the cell clusters being evaluated to determine diagnostics for the adequacy of the coverage provided by the cells in the cell cluster; and determining, based on the evaluation of the cell clusters, one or more suggested changes to the configuration of base stations providing the radio access network to improve the adequacy of the coverage of the radio access network.. In this way, by analysing and clustering cells based on a connection metric indicative of a distribution of connections throughout the coverage area for that base station, cells that may provide coverage that is inadequate for the needs of users in those geographic regions can be automatically identified, allowing suggested changes to improve the coverage to be determined.

The method may further comprise: receiving data representative of one or more further different connection metrics, each connection metric being indicative of a different quality of the connections as they are distributed throughout the coverage area for a base station; generating a normalized frequency distribution for each connection metric for each cell, representative of a probability density function for that metric; determining, for each cell, a set of connection diagnostic features from the probability density function for each connection metric; wherein the clustering of the cells using an unsupervised machine learning algorithm is based on the determined connection diagnostic features based on each connection metric. In this way, multiple different connection metrics can be monitored and used to generate probability density functions and, in turn, connection diagnostic features that may reveal different aspects of the coverage characteristics of the cells. By clustering the cells using the connection diagnostic features generated from multiple different connection metrics, more precise clusterings can be generated capturing different connection characteristics, such that appropriate diagnostics and suggested changes to the network can be further improved.

The method may further comprise the or each connection metric being representative of one of: a propagation delay for signals received at the base stations from user equipment having an established connection to one of the base stations; a path loss for signals received at the base stations from user equipment having an established connection to one of the base stations; an available power headroom for connections to user equipment having an established connection to one of the base stations; a transmission power for connections to user equipment having an established connection to one of the base stations; a signal to noise ratio for connections to user equipment having an established connection to one of the base stations; an interference for connections to user equipment having an established connection to one of the base stations. In this way, this exemplary range of connection metrics covering connection distance, path loss, power, noise and signal levels, and interference, can reveal a range of different characteristics of how the user equipment is distributed throughout the coverage area.

The method may also include, if data representative of a propagation delay is received as a connection metric, converting, for each cell provided by the base stations, the data representative of a propagation delay to a distance between the base station and the connected user equipment; generating, for each cell, data representative of a normalised frequency distribution of the connection distance between the base station and the user equipment connected to the base station over the operation period, the normalised frequency distribution representing a probability density function for the connection distance to user equipment in the cell. In this way, the distribution of connection distances between the base station and connected user equipment can be revealed and analysed to evaluate the adequacy of the coverage.

The method may also include where the data representative of a propagation delay includes a timing advance reported by the base stations for user equipment connected to the base station. In this way, a timing advance generated by mobile network equipment in the base stations can be converted to a connection distance for established connections to user equipment.

The method may also include where the received data representative of a connection metric is binned, and wherein generating the normalised frequency distribution comprises: randomly allocating each received connection metric data to a non-binned value within the range of its respective bin. In this way, probability density functions for the connection metric can be generated.

The method may also include wherein determining, for each cell, a set of connection diagnostic features from the probability density function of the connection metric comprises determining one or more of: determining, from the probability density function, a modal connection metric value at which a maximum occurs in the probability density function; determining, from the probability density function, one or more connection metric values within which a connection is likely to occur to a given probability from the probability density function; determining, from the probability density function, a median connection metric value at which connection is likely to occur with a 50% probability; determining, from the probability density function, an overspill connection metric value as a difference between the threshold connection metric value within which connection is likely to occur to a given threshold probability and a maximum connection metric value within which connection is likely to occur to a maximum probability; determining an overspill ratio as the ratio of the overspill connection metric value to the threshold connection metric value. Extracting one or more of these features from the probability density functions for each cell allows the cells to be clustered into cell clusters having similar distributions of the connection metrics and coverage characteristics.

The method may also include where one or more of the connection diagnostic features determined from the probability density function of the connection metric is a sufficient statistic summarising all of the information in the data representative of the connection metric for the signals received at the base stations about a population parameter the statistic represents. Extracting sufficient statistics from the probability density functions to provide one or more of the connection diagnostic features ensures that these features characterise the distributions of the probability density functions of the cells as uniquely and as extensively as possible, allowing the clustering to group cells with similar distributions and disambiguate between cells having different clearly different distributions.

The method may also include where the data representative of a connection metric is received for multiple different bands served in each cell, and where a probability density function and set of connection diagnostic features are generated for each band separately, the cells being clustered for each band served by that cell separately, based on the sets of connection diagnostic features generated for each band. The method may also include comparing the cell clusters for each band served by a cell in the same sector to identify cells having different coverage characteristics for different bands in the same cell sector, indicating that the base station may be configured differently for different bands in the same cell sector.

The method may also include determining an overlap between the probability density functions generated for each band in the same cell sector, and determining one or more suggested changes to the configuration of the base station to optimise load balancing between the different bands in the same cell sector.

The method may also include where the data representative of a connection metric is received for multiple different bands served in each cell across different Radio Access Technologies (RATs) supported by the base stations, the method further includes determining an overlap between the probability density functions generated for each band of different Radio Access Technologies in the same cell to identify cells having different coverage characteristics for different Radio Access Technologies in the same cell, indicating that user equipment in the cell may experience connection problems with falling back to different Radio Access Technologies.

Analysing and clustering the probability density functions for different bands and Radio Access Technologies in the same cell in this way allows for configuration errors to be diagnosed, and for the configuration of cells to be improved to ensure the arrangement of coverage and fallback between the different bands is optimal.

The method may also include further includes receiving topological data including location information for the base stations in the radio access network, determining, based on the topological data, for each cell, one or more intersite distance features based on the distance between the base station providing the cell, and one or more other base stations located in the main beam of the cell, where clustering cells is further based on the determined intersite distance features for each cell. Including the intersite distance features in the connection diagnostic features for clustering in this way allows the topological distribution and separation or density of base stations and cells to be taken into account.

The method may also include labelling a cell or a cell clusters with one or more diagnostic labels based on connection diagnostic features for cells in each cell cluster. The diagnostic labels may represent characteristics of the clustered cells such as their siting, or - indications of the adequacy or the inadequacy of the coverage provided thereby. For example, the diagnostic labels may indicate whether the cells in the cluster may be located at urban or rural sites, on the coast or serving arterial roads; whether the site is in a good, moderate or poor location; whether a neighbouring site is missing or a new site is needed; whether there may be an antenna configuration error for one or more bands; whether the site is blocked; and whether the cell suffers from overspill.

The method may also include, if data representative of a propagation delay is received as a connection metric and converted to a connection distance, labelling a cell as a potential blocked cell based on one or more of the maximum connection distance being less than a threshold proportion of the minimum intersite distance (for example, 0.75, 0.7, 0.65, 0.6, 0.55, 0.5, 0.45, or 0.4 or less), the overspill ratio being less than a threshold value (for example, 0.5, 0.4, 0.3, 0.2, or 0.1 or less), the maximum distance being less than a threshold value (for example, 1000m, 900m, 800m, 700m, 600m, 500m, 400m, 300m, 200m or less).

The method may also include, if data representative of a propagation delay is received as a connection metric and converted to a connection distance, labelling a cell as potentially being poorly located, requiring an additional neighbouring cell site, or requiring antenna realignment based on one or more of an overspill ratio being greater than a threshold value (for example, 0.8, 0.9, 1, 1.1, 1.2, 1.3, or 1.4 or more), a modal distance or a median distance being greater than a threshold value (for example, 1.5km, 1.75km, 2km, 2.25km, 2.5km, 2.75km, or 3km or more), a maximum distance being greater than a threshold value (for example, 8km, 10km, 12km, 14km, 16km, 18km, or 20km or more).

The method may also include further includes evaluating the data representative of the cell clusters to determine diagnostics for the adequacy of the coverage provided by the cells in the cell cluster. The evaluating may include using a trained classifier to apply diagnostic labels to the cells or the cell cluster based on at least the connection diagnostic features for the cells. In this way, the diagnostic labels can be automatically applied based on a classification of the clustered cells, facilitating the analysis of the cells and an identification of the suggested changes to the configuration of base stations to improve the adequacy of the coverage. Alternatively, or in addition, the evaluating may include determining a diagnostic score representative of the adequacy of the coverage provided by the cells. Similarly, the determination of a diagnostic score automates the prioritisation of the cells for planning interventions.

The method may also include further includes displaying the cells of the cell clusters as an overlay on a map.

The method may also include further includes making one or more of the suggested changes to the configuration of base stations providing the radio access network to improve the adequacy of the coverage of the radio access network; and comparing a probability density function for the affected cells before and after making the suggested changes to assess an improvement in the adequacy of the coverage of the radio access network.

Viewed from another aspect, the present disclosure provides a computing apparatus. The computing apparatus includes a processor and a memory storing instructions that, when executed by the processor, configure the apparatus to receiving, for cells provided by base stations of a radio access network, data representative of a connection metric reported by each base station for user equipment having an established connection to one of the base stations, the connection metric being collected over an operation period of the radio access network for all connections, the collected connection metric data for each base station being indicative of a distribution of connections throughout the coverage area for that base station; generating, for each cell, data representative of a normalised frequency distribution of the connection metric between the base station and the user equipment connected to the base station over the operation period, the normalised frequency distribution representing a probability density function for the connection metric; determining, for each cell, a set of connection diagnostic features from the probability density function of the connection metric, the connection diagnostic features being selected to indicate characteristics of the distribution of the connection metric in the coverage area provided by the cells; using an unsupervised machine learning algorithm, clustering cells based on the determined connection diagnostic features for the cells into clusters of similar distributions of the connection metric, the data representative of the cell clusters being evaluated to determine diagnostics for the adequacy of the coverage provided by the cells in the cell cluster; and

determining, based on the evaluation of the cell clusters, one or more suggested changes to the configuration of base stations providing the radio access network to improve the adequacy of the coverage of the radio access network.

Viewed from another aspect, the present disclosure provides a computer-readable storage medium, the computer-readable storage medium including instructions that when executed by a computer, cause the computer to receiving, for cells provided by base stations of a radio access network, data representative of a connection metric reported by each base station for user equipment having an established connection to one of the base stations, the connection metric being collected over an operation period of the radio access network for all connections, the collected connection metric data for each base station being indicative of a distribution of connections throughout the coverage area for that base station; generating, for each cell, data representative of a normalised frequency distribution of the connection metric between the base station and the user equipment connected to the base station over the operation period, the normalised frequency distribution representing a probability density function for the connection metric; determining, for each cell, a set of connection diagnostic features from the probability density function of the connection metric, the connection diagnostic features being selected to indicate characteristics of the distribution of the connection metric in the coverage area provided by the cells; using an unsupervised machine learning algorithm, clustering cells based on the determined connection diagnostic features for the cells into clusters of similar distributions of the connection metric, the data representative of the cell clusters being evaluated to determine diagnostics for the adequacy of the coverage provided by the cells in the cell cluster; and determining, based on the evaluation of the cell clusters, one or more suggested changes to the configuration of base stations providing the radio access network to improve the adequacy of the coverage of the radio access network.

Viewed from another aspect, the present disclosure provides a method for use in evaluating the coverage provided by base stations of a cellular radio access network, including receiving, for cells provided by base stations of a radio access network, data representative of a propagation delay for signals received at the base stations from user equipment having an established connection to one of the base stations, collected over an operation period of the radio access network, converting, for each cell provided by the base stations, the data representative of a propagation delay to a distance between the base station and the connected user equipment, generating, for each cell, data representative of a normalised frequency distribution of the connection distance between the base station and the user equipment connected to the base station over the operation period, the normalised frequency distribution representing a probability density function for the connection distance to user equipment in the cell, determining, for each cell, a set of connection diagnostic features from the probability density function of the connection distance, the connection diagnostic features being selected to indicate characteristics of the distribution of the connection distances in the coverage area provided by the cells, using an unsupervised machine learning algorithm, clustering cells based on the determined connection diagnostic features for the cells into clusters of similar distributions of the connection distances, the data representative of the cell clusters being evaluated to determine diagnostics for the adequacy of the coverage provided by the cells in the cell cluster, and determining, based on the evaluation of the cell clusters, one or more suggested changes to the configuration of base stations providing the radio access network to improve the adequacy of the coverage of the radio access network. In this way, by analysing and clustering cells based on the distance over which wireless connections are established, cells that may provide coverage that is inadequate for the needs of users in those geographic regions can be automatically diagnosed, allowing suggested changes to improve the coverage to be determined.

The method may also include where the data representative of a propagation delay includes a timing advance reported by the base stations for user equipment connected to the base station. In this way, a timing advance generated by mobile network equipment in the base stations can be converted to a connection distance for established connections to user equipment.

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 shows an example radio access network including base stations providing connections to a plurality of user equipment across a coverage area, the base stations being coupled to a coverage evaluation apparatus for evaluating the coverage provided by base stations in accordance with aspects of the disclosure;

FIG. 2 shows in more detail an example coverage evaluation apparatus for evaluating the coverage provided by base stations in accordance with aspects of the disclosure;

FIG. 3 shows an example method for use in evaluating the coverage provided by base stations of a cellular radio access network based on receiving a propagation delay as a connection metric and converting it to a connection distance, in accordance with aspects of the disclosure;

FIG. 4 shows an example arrangement of base stations providing connections to a plurality of user equipment across a coverage area for evaluation by a coverage evaluation apparatus in accordance with aspects of the disclosure;

FIG. 5 shows an example of a set of cell clusters produced by a coverage evaluation apparatus evaluating the coverage provided by base stations of a cellular radio access network, based on clustering connection diagnostic features generated from probability density functions of propagation delay data (converted to connection distance) received as a connection metric, in accordance with aspects of the disclosure;

FIG. 6 shows an example probability density function of a cell assigned to cell cluster 1 shown in FIG. 5, the cell cluster being assigned a diagnostic label of 'normal' and 'good location';

FIG. 7 shows an example probability density function of a cell assigned to cell cluster 0 shown in FIG. 5, the cell cluster being assigned the diagnostic labels of 'rural site', 'sub-optimal acquisition' and 'high overspill';

FIG. 8 shows an example probability density function of a cell assigned to cell cluster 10 shown in FIG. 5, the cell cluster being assigned the diagnostic labels of 'good location', 'high overspill' and 'new neighbouring sites needed';

FIG. 9 shows an example probability density function of a cell assigned to cell cluster 4 shown in FIG. 5, the cell cluster being assigned the diagnostic labels of 'road site', 'bad location';

FIG. 10 shows an example probability density function of a cell assigned to cell cluster 5 shown in FIG. 5, the cell cluster being assigned the diagnostic labels of 'moderate location', 'coverage spread over wide range' and 'new neighbouring sites needed';

FIG. 11A shows an example probability density function of a cell with different bands assigned to different cell clusters;

FIG. 11B shows an example probability density function of a cell illustrating the determination of an overlap between the coverage of different bands having different distributions;

FIG. 12 shows an example probability density function of a cell assigned to a cell cluster being assigned the diagnostic label of 'suspected blocked cell';

FIG. 13 shows an example of another set of cell clusters produced by a coverage evaluation apparatus evaluating the coverage provided by base stations of a cellular radio access network in accordance with aspects of the disclosure, the cell clusters having had diagnostic labels applied by a trained classifier;

FIG. 14 shows an example method for use in evaluating the coverage provided by base stations of a cellular radio access network in accordance with aspects of the disclosure;

FIG. 15 shows an example of a set of cell clusters produced by a coverage evaluation apparatus evaluating the coverage provided by base stations of a cellular radio access network, based on clustering connection diagnostic features generated from probability density functions of path loss data received as a connection metric, in accordance with aspects of the disclosure;

FIG. 16 shows shows an example probability density function of a cell assigned to cell cluster 0 shown in FIG. 15;

FIG. 17 shows shows an example probability density function of a cell assigned to cell cluster 8 shown in FIG. 15; and

FIG. 18 shows an example of a set of cell clusters produced by a coverage evaluation apparatus evaluating the coverage provided by base stations of a cellular radio access network, based on clustering connection diagnostic features generated from probability density functions of propagation delay (represented by reported timing advance) data and from path loss data received as connection metrics, in accordance with aspects of the disclosure.

DETAILED DESCRIPTION

Hereinafter, embodiments of the disclosure are described with reference to the accompanying drawings.

As used herein, the terms "have," "may have," "include," or "may include" a feature (e.g., a number, function, operation, or a component such as a part) indicate the existence of the feature and do not exclude the existence of other features.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, a first user device and a second user device may indicate different user devices from each other regardless of the order or importance of the devices. For example, a first component may be denoted a second component, and vice versa without departing from the scope of the disclosure.

It will be understood that when an element (e.g., a first element) is referred to as being (operatively or communicatively) "coupled with/to," or "connected with/-to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

As used herein, the terms "configured (or set) to" may be interchangeably used with the terms "suitable for," "having the capacity to," "designed to," "adapted to," "made to," or "capable of" depending on circumstances. The term "configured (or set) to" does not essentially mean "specifically designed in hardware to." Rather, the term "configured to" may mean that a device can perform an operation together with another device or parts.

For example, the term "processor configured (or set) to perform A, B, and C" may mean a generic-purpose processor (e.g., a CPU or application processor) that may perform the operations by executing one or more software programs stored in a memory device or a dedicated processor (e.g., an embedded processor) for performing the operations.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the disclosure.

As used herein, "Base station" refers to a network node comprised in a cellular radio network for providing, via one or more antennae, cells of radio coverage in which a wireless radio connection to user equipment may be established. The Base Station may comprise a base station (BS), radio base station, base transceiver station (BTS), base station controller (BSC), radio network controller (RNC), evolved Node B (eNB or eNodeB), Node B, multi-standard radio (MSR) radio node such as MSR BS, multi-cell/multicast coordination entity (MCE), relay node, donor node controlling relay, radio access point (AP), and suchlike.

As used herein, "Radio access network" refers to a network of base stations arranged to support radio communications within one or more cells emanating therefrom implementing one or more Radio Access Technologies to establish wireless radio connections to user equipment to enable them to communicate with the core network and other connected networks via the base stations.

As used herein, "Radio Access Technology" (RAT) refers to a set of technologies deployed together between a set of base stations providing a radio access network by which a physical connection can be established for wireless communication between user equipment and the radio access network. Radio Access Technologies are commonly deployed together according to agreed standards by which interoperation between different equipment in the network is facilitated. Example Radio Access Technologies include those established by various standards released by the Third Generation Partnership Project (3GPP) such as GSM and related 2G and 2.5G standards, including GPRS and EDGE, UMTS and related 3G standards, including HSPA and HSPA+, LTE and related 4G standards, including LTE Advanced and LTE Advanced Pro, and 5G NR and related 5G standards, including 5G-Advanced.

As used herein, "Band" refers to one or more frequency bands of Radio Access Technologies supported by base stations for wireless communication with user equipment. For example, a base station may support both UMTS and LTE Radio Access Technologies and be configured for communication in the 900 MHz band in UMTS and in the 1800 MHz and 2100 MHz bands in LTE.

As used herein, "User equipment" refers to any suitable mobile or stationary device that can receive wireless communication signals. This term is also intended to include devices which communicate with another device that can receive wireless communication signals such as by short-range wireless connection. In addition, this terms is intended to include wireless communication devices that can communicate with a core network via a radio access network (RAN), and through the core network the UEs can be connected with external networks such as the Internet and with other UEs. UEs can be embodied by any of a number of types of devices including but not limited to printed circuit (PC) cards, compact flash devices, external or internal modems, wireless phones, smartphones, tablets, tracking devices, asset tags, and so on.

As used herein, "Cell" refers to the area of signal coverage a base station provides, within which it is intended that user equipment can establish a wireless radio connection to the base station. The cell is typically formed as a sector emanating from the antenna at the base station, with the nominal radius of the coverage area depending on a range of intrinsic factors including the frequency band, the Radio Access Technology, and antenna and base station configuration and power, and on extrinsic factors such as the topology, man-made structures and atmospheric conditions. The nominal coverage provided by a cell may differ from the location and distance distribution of user equipment actually establishing a connection with the base station. For example, in an urban environment the density of users may be such that a large number of user equipment are densely located near the base station (e.g. within 1-2 km) such that the majority of the connections are well within the nominal coverage area (which may be e.g. around 12 km for LTE 2100 MHz band). However, connections with user equipment beyond this nominal distance may be established if the user equipment receives a sufficiently strong signal from the base station. Generally, the further away from a base station, the lower the signal strength, the more unstable the signal and the lower the bandwidth.

As used herein "connection metric" refers to any metric reported by base stations of the Radio Access Network indicative of a distribution of connections to user equipment throughout the coverage area for that base station. That is, the coverage metric may reveal some information about how user equipment connected to the base station are distributed throughout the coverage area (on average), which may be in terms of the distance to connected user equipment (for example determined from a reported propagation delay or timing advance), the path loss to connected user equipment, the available power headroom or transmission power for connections to user equipment, a signal to noise ratio for connections to user equipment, or an interference for connections to user equipment. This connection metric may give some indication about the characteristics and appropriateness of the location and configuration of the base station, as well as facilitating an assessment of the adequacy of the coverage provided thereby, to aid in network planning and maintenance.

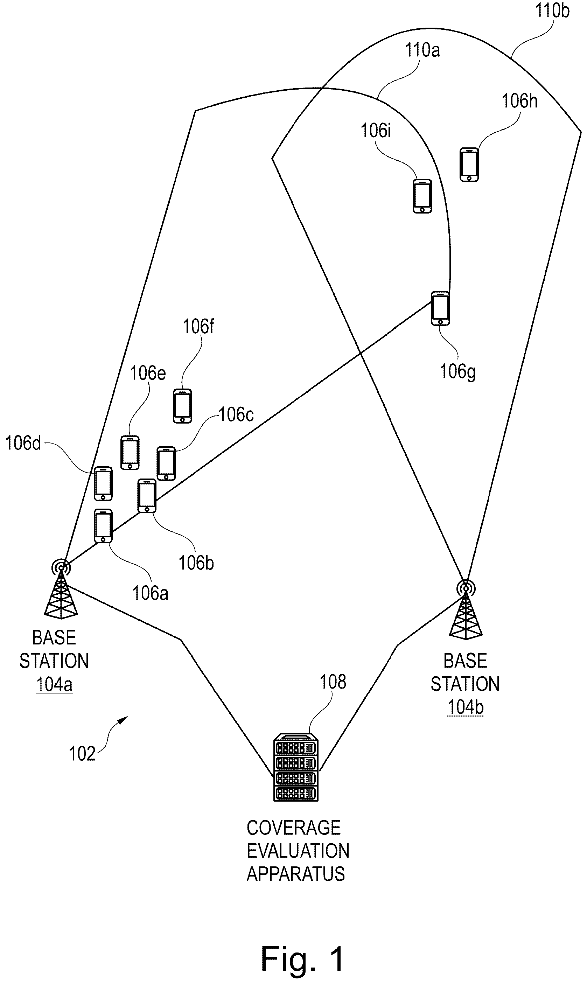

Reference will now be made to FIG. 1 in which example base station 104a and base station 104b of a plurality of base stations is shown, the base stations being arranged throughout a geographic region provide an example radio access network 102. It should be noted that the radio access network 102 includes many more base stations than those shown in FIG. 1, with only two base stations being shown for ease of understanding. Base station 104a provides a cell shown as cell sector 110a of coverage within which connections to a plurality of user equipment can be established for user equipment that run an acquisition procedure and can receive sufficient signal and are allocated radio resources by the base station 104a in a connection establishment procedure. Similarly, base station 104b provides a cell shown as cell sector 110b of coverage within which connections to a plurality of user equipment can be established for user equipment that run an acquisition procedure and can receive sufficient signal and are allocated radio resources by the base station 104b in a connection establishment procedure.

User equipment 104a-i are spread throughout the geographic region, used by users having subscriptions to the mobile network operator to establish wireless connections to the radio access network 102 to achieve voice and data communications with, for example, the Internet. Demand for wireless connections follows the distribution of users in the geographic region. To establish a wireless connection, each user equipment 104a-i performs a cell search and signal acquisition procedure in accordance with one or more Radio Access Technologies to determine base stations from which the user equipment can receive sufficient signal to establish a connection at their current location. In this connection establishment process, the base station with which the user equipment establishes a connection in the form of a radio bearer allocates radio resources to the particular user equipment by which the user equipment and the base station can transfer data in the uplink and downlink channels.

In the example shown, the base station 104a may be located in a relatively urban setting where a density of users is higher and as such has connections established with user equipment 106a, user equipment 106b, user equipment 106c, user equipment 106d, user equipment 106e, user equipment 106f located relatively near to the base station 104a. On the other hand, the base station 104b may be located in a relatively rural setting where a density of users is lower and as such has connections established with user equipment 106g, user equipment 106h spread out over locations relatively far from to the base station 104b. However, the user equipment 106i, although relatively distant from the base station 104a, can establish a connection to the base station 104a, as can the user equipment 106g and user equipment 106h if the base station 104a is configured such that the signal power transmitted thereby is too high, and if the topology is such that the signal from base station 104b is significantly attenuated (such as the signal being blocked by a topological feature) before reaching the distant locations of the user equipment 106g, user equipment 106h and user equipment 106i. This can lead to an unstable connection for the user equipment 106g, user equipment 106h and user equipment 106i in the cell sector 110b, and service below expected quality levels. Similarly, the base station 104a may be oversubscribed, with resource contention exacerbated by the overspilling of the signal from the base station 104a to establish connections to user equipment at distant locations, which can again lead to unstable connections for users in the coverage area of cell sector 110a.

To evaluate the coverage provided by base stations of the cellular radio access network 102, the base stations including base station 104a and base station 104b are communicatively coupled to Coverage evaluation apparatus 108 for example via the Internet. The Coverage evaluation apparatus 108 is configured to assess the adequacy of the coverage provided by base stations across the radio access network 102 to automate the analysis of the service of the user equipment by the base stations and facilitate the identification of any cells that may be suffering from a sub-optimal location, density, and configuration of the base stations. The Coverage evaluation apparatus 108 may also be used to suggest one or more changes to the base stations and radio access network 102 to improve the adequacy of the coverage to seek a better matching between the supply of radio resources thereby and the demand for the establishment of stable wireless radio connections by users in the geographic region.

For this, as will be explained in more detail below, the Coverage evaluation apparatus 108 receives and analyses data representative of one or more coverage metrics reported by each base station the radio access network 102 for user equipment having an established connection to one of the base stations. This data may be collected over an operation period of the radio access network 102 and periodically provided to the Coverage evaluation apparatus 108 for analysis.

The reported and analysed connection metric is indicative of a distribution of connections to user equipment throughout the coverage area for the base station. That is, the coverage metric reveals some information about how user equipment connected to the base station are distributed throughout the coverage area (on average). A number of connection metrics may be used, which be metrics in terms of the distance to connected user equipment (for example determined from a reported propagation delay or timing advance), the path loss to connected user equipment, the available power headroom or transmission power for connections to user equipment, a signal to noise ratio for connections to user equipment, or an interference for connections to user equipment. This connection metric may give some indication about the characteristics and appropriateness of the location and configuration of the base station, as well as facilitating an assessment of the adequacy of the coverage provided thereby, to aid in network planning and maintenance. While connection metrics representing the propagation delay may reveal information about the distribution of user equipment connections in the coverage area in terms of distance from the base station, other metrics may reveal useful information about different aspects of the distribution of the user equipment connection characteristics throughout the coverage area. For example, received power or path loss data may reveal information about how the signal strength drops off for user equipment throughout the coverage area. Received interference and signal to noise ratio data may reveal information about how signal interference is experienced for user equipment throughout the coverage area.

For example, the following metrics reported as counters by eNodeBs in an LTE RAN may be used:

- L.Thrp.bits.UE.UL.PL1-14: this reported metric set indicates the distribution of total uplink traffic volume of PDCP PDUs for UEs with different path loss ranges

- L.PHR.UE.Index0-8: this reported metric set indicates the power headroom values reported by UEs in the cell

- L.UL.RSRP.PUCCH.Index0-23: this reported metric set indicates the distribution of the detected RSRPs reported by UEs in the cell on the PUCCH

- L.UL.RSRP.PUSCH.Index0-23: this reported metric set indicates the distribution of the detected RSRPs reported by UEs in the cell on the PUSCH

- L.UL.Interference. PUCCH.Index0-15: this reported metric set indicates the distribution of the detected PRB-level interference noise reported by UEs in the cell on the PUCCH

- L.UL.Interference. PUSCH.Index0-15: this reported metric set indicates the distribution of the detected PRB-level interference noise reported by UEs in the cell on the PUSCH

- L.UL.SINR.PUCCH.Index0-12: this reported metric set indicates the distribution of the detected PUCCH SINR reported by UEs in the cell

- L.UL.SINR.PUSCH.Index0-7: this reported metric set indicates the distribution of the detected PUSCH SINR reported by UEs in the cell

Where propagation delay is to be used as a connection metric, a timing advance reported by the base stations for user equipment connected to the base station may be used. That is, as part of the connection establishment and management procedures, the user equipment must be configured to synchronise its signalling with the base station to ensure its uplink signalling and data payload are received at the base station within the correct time slots allocated to that user equipment. To compensate for the length of time a signal takes to reach the base station from the user equipment, the user equipment is configured with an appropriate timing advance which differs depending on the distance of the user equipment from the base station to which it is connected. The timing advance may be a value by which the radio access network 102 configures each user equipment such that the user equipment transmits its uplink data and signalling early to ensure that signals from each user equipment throughout the coverage area are received in synchronisation with the timeslots. The timing advance value assigned to a given user equipment may be converted to a time difference value corresponding to the propagation delay for signals between the user equipment and the base station. This propagation delay may then be converted to a distance between the user equipment and the base station. For example, in the cell sector 110a, the user equipment 106f may be configured to have a greater timing advance than the user equipment 106a.

In LTE, the timing advance is an index value configured to a user equipment indicating an offset between the start of a received downlink timing subframe and a transmitted uplink timing subframe. The timing advance is necessary to ensure downlink and uplink radio subframes are synchronised with the base station. The timing advance, $T_A$, is in index value which can take any integer between 0 and 1282. The timing offset (i.e. propagation delay), $N_{TA}$, in seconds, between the uplink and downlink subframes is then calculated as:

$$N_{TA} = 16 * T_A * T_S$$

where $T_S$ = 1/(2048×15000) = 1/30720000 sec.

Thus the distance, D, to the user equipment, in metres, having a given timing advance index value, $T_A$, corresponding to this propagation delay can then be calculated as:

$$D = (3*10^8*N_{TA})/2$$

Thus in the example shown in FIG. 1, the user equipment 106a has an established connection to base station 104a and is configured to have a timing advance index of $T_A$ = 5. This timing advance corresponds to a distance of 390 metres, and so thus user equipment 106a can be assumed to be around 390 metres from the base station 104a. On the other hand, the user equipment 106i has an established connection to base station 104a and is configured to have a timing advance index of $T_A$ = 200. This timing advance corresponds to a distance of 15625 metres, and so thus user equipment 106i can be assumed to be around 15.6 km from the base station 104a. Thus as will be explained in more detail below, by collecting and analysing the data representative of a propagation delay for signals received at the base stations in the radio access network 102 from user equipment having an established connection to one of the base stations, the Coverage evaluation apparatus 108 may evaluate the adequacy of the coverage provided by the radio access network 102.

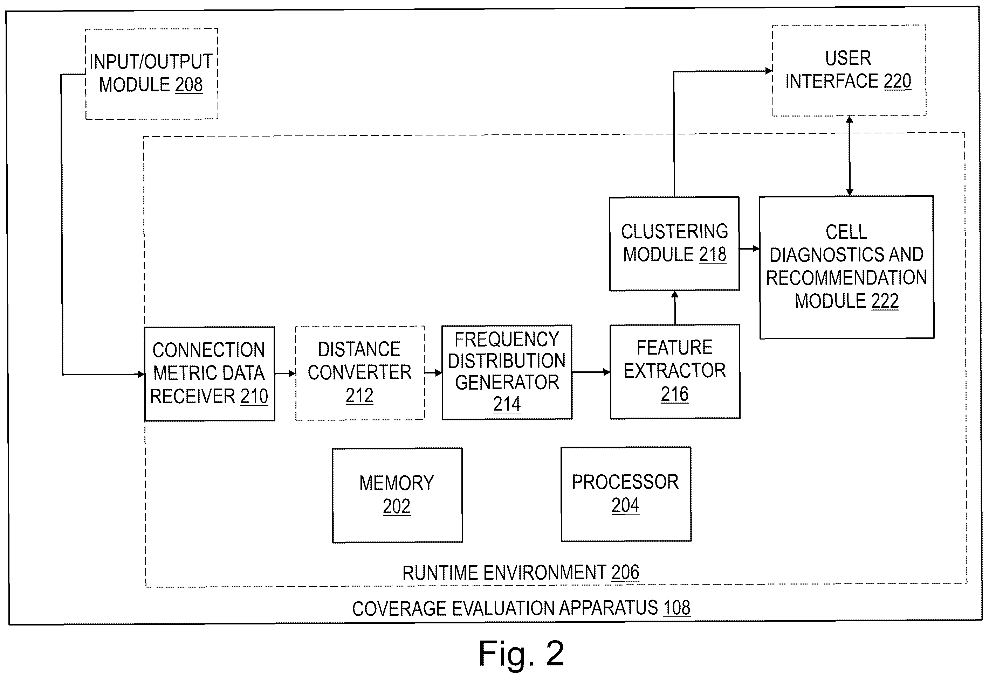

Reference will now be made to FIG. 2 which shows in more detail an example coverage evaluation apparatus 108 for evaluating the coverage provided by base stations in accordance with aspects of the disclosure.

The coverage evaluation apparatus 108 comprises memory 202, one or more processors 204 and an input/output module 208. A bus system (not shown) may be provided which supports communication between at the least one processor 204, memory 202 and input/output module 208.

The processor 204 executes instructions that can be loaded into memory 202. The processor 204 can include any suitable number(s) and type(s) of processors or other devices in any suitable arrangement. Example types of processor 204 include microprocessors, microcontrollers, digital signal processors, field programmable gate arrays and application specific integrated circuits.

The memory 202 may be provided by any structure(s) capable of storing and facilitating retrieval of information (such as data, program code, and/or other suitable information on a temporary or permanent basis). The memory 202 can represent a random access memory or any other suitable volatile or non-volatile storage device(s). The memory 202 may also contain one or more components or devices supporting longer-term storage of data, such as a read only memory, hard drive, flash memory, or optical disc, which may store software code for loading into the memory 202 at runtime. In use, the processor 204 and memory 202 provide a runtime environment 206 in which instructions or code loaded into the memory 202 can be executed by the processor to generate instances of software modules in the runtime environment 206.

The coverage evaluation apparatus 108 also comprises input/output module 208 providing a communications interface for receiving data from at least the base stations of the radio access network 102.

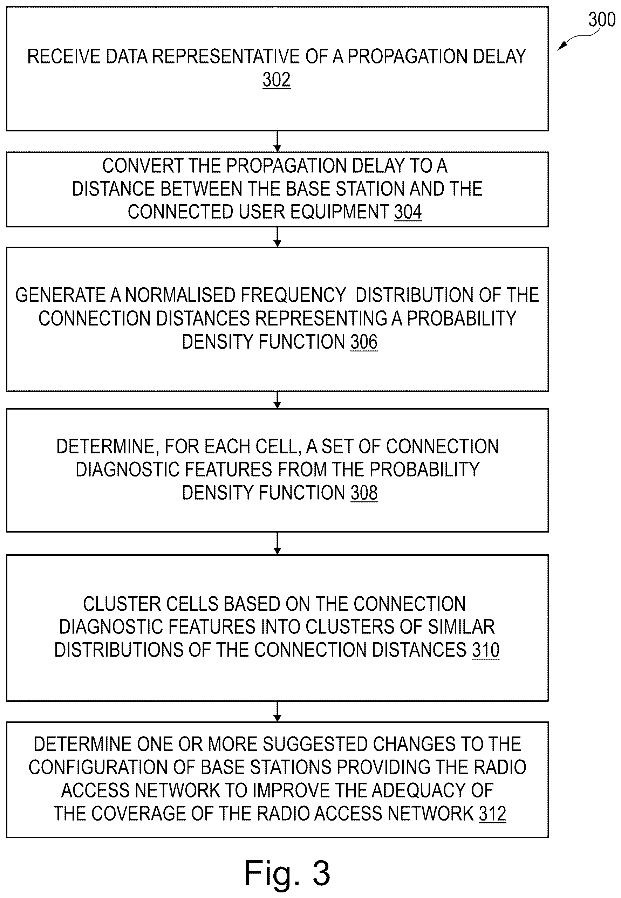

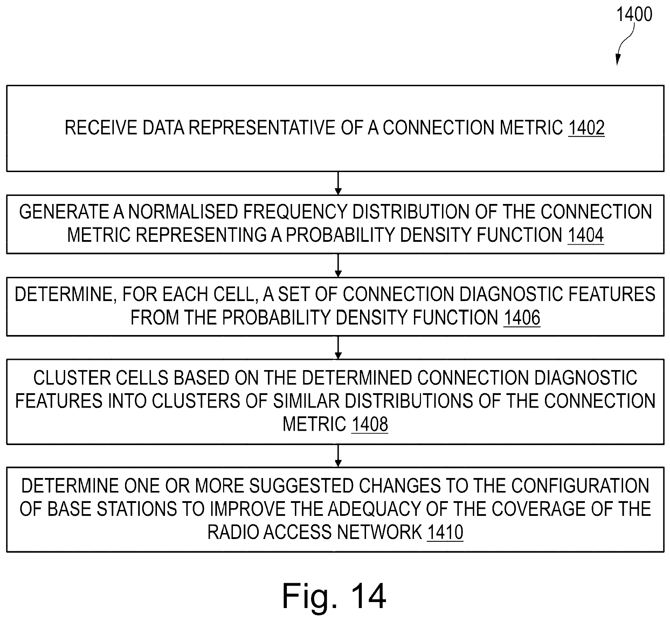

The memory 202 comprises instructions which, when executed by the one or more processors 204, cause the one or more processors 204 to instantiate a connection metric data receiver 210, a frequency distribution generator 214, a feature extractor 216, a clustering module 218, and a cell diagnostics and recommendation module 222. In examples, the memory 113 may also comprise instructions which, when executed by the one or more processors 112, cause the one or more processors 112 to instantiate and configure a distance converter 212 and/or a user interface 220 (shown in dotted outlines to indicate that this feature is in examples not provided). Together, the connection metric data receiver 210, frequency distribution generator 214, feature extractor 216, clustering module 218, and cell diagnostics and recommendation module 222 may carry out the general method 1400 shown in Figure 14 for use in evaluating the coverage provided by base stations of cellular radio access network 102. This method, for processing any of the coverage metrics disclosed herein, will be described alongside the more specific method, shown in Figure 3, in with the received connection metric represents a propagation delay.

Referring now to FIG. 14, in step 1402, the coverage evaluation apparatus 108 periodically receives, in use, data representative of one or more connection metrics (such as the counters indicated above) reported by each base station (including the base station 104a and base station 104b in the example) for user equipment having an established connection to one of the base stations. The connection metric is collected over an operation period of the radio access network for all connections. The collected connection metric data for each base station is indicative of a distribution of connections throughout the coverage area for that base station

In the specific example of Figure 3, the coverage evaluation apparatus 108 periodically receives, in use, data representative of a propagation delay for signals received at the base stations of the radio access network (including the base station 104a and base station 104b in the example) from user equipment having an established connection to one of the base stations.

In use, this data is received at the input/output module 208 and passed to the connection metric data receiver 210. The data has been collected over an operation period of the radio access network 102, and as such the data may contain an extremely large amount of entries of the propagation delay assigned to user equipment connected to the different base stations. For example, this coverage evaluation may be performed on a regular basis, such as quarterly, to monitor and improve the coverage provided by the network plan.

In the specific example of Figure 3, in step 304, the propagation delay data is converted to a distance between the base station and the connected user equipment. For this, the propagation delay data receiver 210 may pass the received propagation delay data to a distance converter 212 which may be provided in the coverage evaluation apparatus 108. The distance converter 212 converts the propagation delay to a distance between the base station and the connected user equipment. The data representative of a propagation delay may include a timing advance reported by the base stations for user equipment connected to the base station. In this case, the conversion may be in accordance with the calculations set out above for converting a timing advance index to a distance between the base station and the user equipment for LTE. In this way, a timing advance generated by mobile network equipment in the base stations can be converted to a connection distance for established connections to user equipment. However, different calculation methods are appropriate for data that differently represents the propagation delay.

Where the connection metric data is indexed, this amounts effectively to a binning of the data. To generate a probability distribution function of the connection metric, the frequency distribution generator 214 may randomly allocate the connection metric data to a non-binned value within the range of its respective bin. For example, for timing advance index counters, the distance spacing between each incremented timing advance index in LTE corresponds to around 80 metres. Thus, a user equipment being configured to have a timing advance index of 5, is not necessarily located 390 metres from the base station, but it could be located anywhere between 350 metres and 430 metres from the base station.

Where the received connection metric data representative of a propagation delay is binned in this way, converting the propagation delay data to a distance may include randomly allocating each received data to a non-binned value within the range of its respective bin, and determining a distance between the base station and the connected user equipment based on the random allocation. Thus a user equipment being configured to have a timing advance index of 5 may be converted to have a distance value of 350 metres of 430 metres based on a random allocation and distribution. In this way, smoothed probability density functions for the connection distance to user equipment in the cell can be generated despite being based on indexed or binned propagation delay data.

In step 1404 in FIG 14 (and step 306 in FIG 3), a normalised frequency distribution of the connection metric is generated representing a probability density function for the likelihood of user equipment connections at different connection metric values within the reported range. This probability density function represents the normalisation of the distribution of connection metric values for each cell. This may be achieved by the connection metric data receiver 210 (or distance converter 212) passing the connection metric data to the frequency distribution generator 214, the frequency distribution generator 214 generating the probability density functions for each cell of the base stations in the radio access network 102.

In step 1406 in Figure 14 (and step 308 in FIG 3), to facilitate and enhance the analysis, a set of connection diagnostic features is determined for each cell from its probability density function. This represents a feature extraction and as such may be performed by feature extractor 216, having been passed the probability density functions from the frequency distribution generator 214. The connection diagnostic features are selected to indicate characteristics of the distribution of the connection metric in the coverage area provided by the cells, as captured in their probability density functions. The extracted features are used in the clustering of cells into groups or clusters of cells that have similar distributions of the connection metrics, thus allowing the cells having suffering from under or overprovisioning due to base station siting and configuration problems to be intelligently grouped and easily identified.

Further granularity of analysis of coverage within each nominal cell may be provided, for example looking at the connection distribution across different bands and Radio Access Technologies within the same cell. For example, where the connection metric data representative of a propagation delay is received for multiple different bands served in each cell, a probability density function and set of connection diagnostic features may be generated for each band separately. Further, where the connection metric data representative of a propagation delay is received for multiple different bands served in each cell across different Radio Access Technologies (RATs) supported by the base stations, a probability density function and set of connection diagnostic features may be generated for each band and Radio Access Technology separately.

One or more of the connection diagnostic features determined from the probability density function of the connection metric may be a sufficient statistic. A sufficient statistic is one that summarises all of the information in the data representative of the connection metric for the signals received at the base stations about a population parameter the statistic represents. Extracting sufficient statistics from the probability density functions to provide one or more of the connection diagnostic features in this way ensures that these features characterise the distributions of the probability density functions of the cells as uniquely and as extensively as possible, allowing the clustering to group cells with similar distributions and disambiguate between cells having different clearly different distributions.

A range of different statistics about the probability density functions can be generated to provide the connection diagnostic features. For example, one of the connection diagnostic features determined from the probability density function of the connection distance may include a modal distance at which a maximum occurs in the probability density function. Another of the connection diagnostic features may include one or more distances within which a connection is likely to occur to a given probability from the probability density function. Another of the connection diagnostic features may include a median distance at which a connection is likely to occur with a 50% probability. Determining a modal distance and median distance of the probability density function indicates where the main body of the distribution of connection distances lies, and helps differentiate between cell sites in urban and rural/other locations. Another of the connection diagnostic features may include an overspill distance as a difference between a threshold distance within which connection is likely to occur to a given threshold probability and a maximum distance within which connection is likely to occur to a maximum probability. The threshold probability may be 90% and the maximum probability may be 99%. Another of the connection diagnostic features may include an overspill ratio determined as the ratio of the overspill distance to the threshold distance. Here, overspill indicates the distance over which the furthest marginal percentage bands of connections are formed. For example, a cell having its nearest 90% of connections neatly contained within 2 km but the next 9% of its connections spread out over the next 10km is suffering from overspill, and an overspill distance and overspill ratio indicate these aspects of the probability density function.

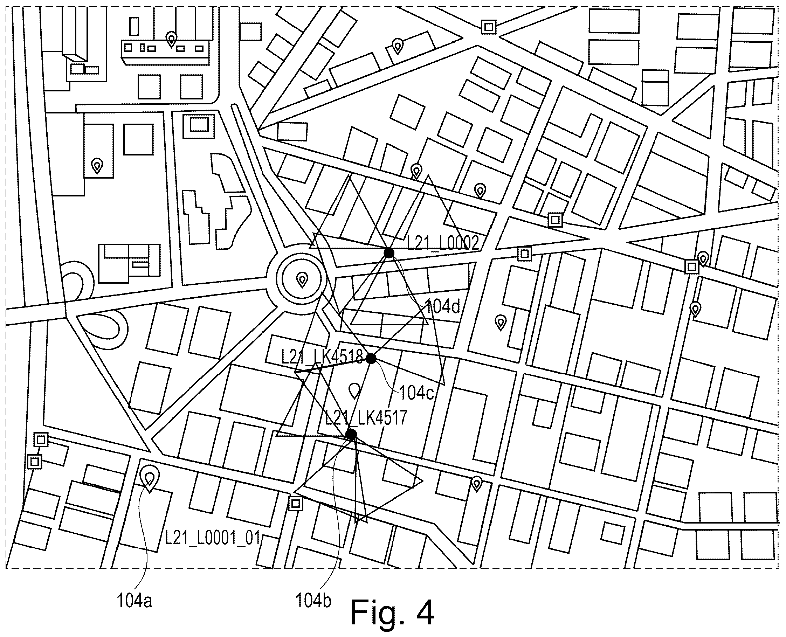

The determination of the connection diagnostic features may also include receiving topological data including location information for the base stations in the radio access network. In the example shown the feature extractor 216 may determine, based on the topological data, for each cell, one or more intersite distance features based on the distance between the base station providing the cell, and one or more other base stations located in the cell. An example of this can be seen in FIG. 4, which shows an example arrangement of base stations providing connections to a plurality of user equipment across a coverage area for evaluation by coverage evaluation apparatus 108. Here, the feature extractor 216 is in receipt of topological data concerning base station 104a. It is in receipt of distance information of other base station sites within a 20 km long triangle filter laid out corresponding the azimuth for the cell of base station 104a under for which intersite distance features are being generated. Here, the filter may return all or a limited number of other base stations within the range. In the example shown in FIG. 4, intersite distances are determined between the base station 104a and the returned other base stations including base station 104b, base station 104c and base station 104d. From these intersite distances, the feature extractor 216 may determine intersite distance features such as the mean and median intersite distance, and the minimum and maximum. These intersite distance features determined for each cell may thus be included by the feature extractor 216 in the connection diagnostic features, and used as part of the basis of the clustering of the cells. Including the intersite distance features in the connection diagnostic features for clustering in this way allows the topological distribution and separation or density of base stations and cells to be taken into account.

Extracting one or more of the above connection diagnostic features from the probability density functions for each cell and other data for the cells allows the cells to be clustered into cell clusters having similar distributions of the connection metrics and coverage characteristics. Where multiple different connection metrics are received and probablilty density functions generated for each cell, each giving different connection diagnostic features, these connection diagnostic features characteristic of different connection metrics and coverage characteristics may be pooled together and used for enhanced clustering.

In step 1408 in FIG 14(and step 310 in FIG 3), cells are clustered based on the connection diagnostic features into clusters of similar distributions of the connection metrics. This may be performed by the clustering module 218 based on the connection diagnostic features provided by the feature extractor 216. The clustering module 218 may perform the clustering using a suitable unsupervised machine learning algorithm, such as a centroid-based k-means clustering-type algorithm which partitions the cells (and bands of cells) into cell clusters based on the distribution of the cells in the multiparameter feature space of the connection diagnostic features. In this way, the clustering module 218 learns the optimum partitioning between the cells based on the generated connection diagnostic features, with the cells being assigned to the cluster having the nearest cluster centroid or mean. In this way, cells assigned to the same cluster are deemed to have probability density functions for their distributions of connection metrics having common features or distribution characteristics, which may not be readily findable or identifiable using existing methods. Thus, large numbers of cells featuring similar inadequacies in their coverage may be clustered together, facilitating their identification and analysis.

Where a set of connection diagnostic features is generated for each band and Radio Access Technology separately, the clustering separately cluster each band and Radio Access Technology for the same cell. In this way, where the coverage characteristics are significantly different for different bands and Radio Access Technologies in the same cell, the clustering module 218 may be free to assign them to different clusters.

Once the clustering module 218 has performed the clustering in an unsupervised manner, the data representative of the cell clusters output from the clustering module 218 may be provided to user interface 220 for readout or display on a display of the coverage evaluation apparatus 108 (or another, remote device).

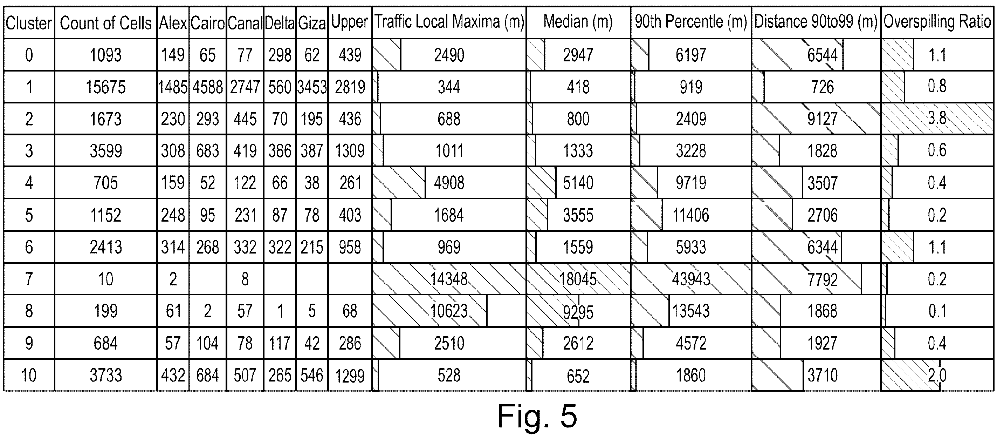

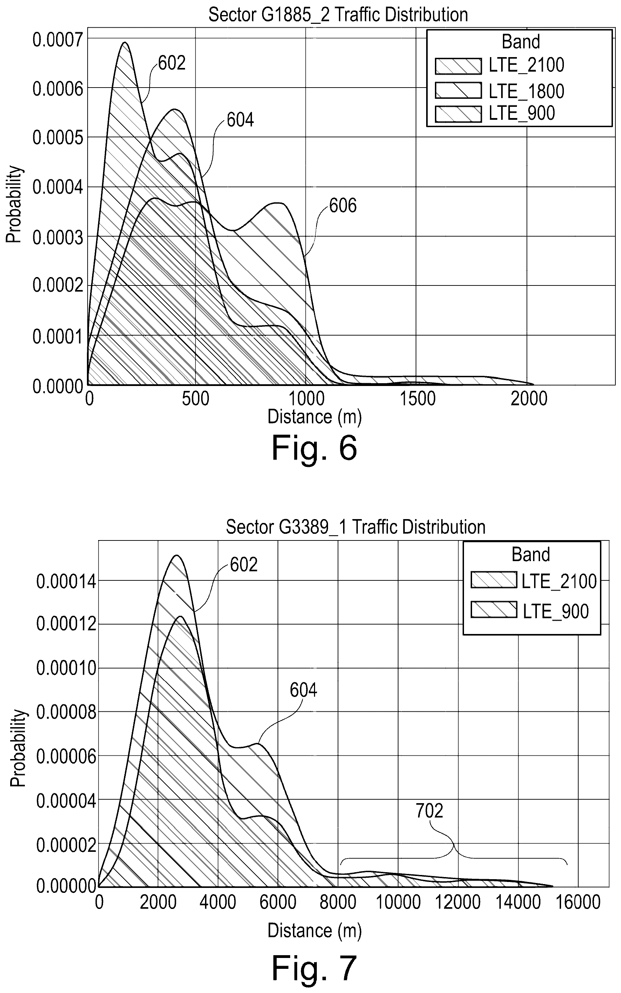

For example, the data representative of the cell clusters may be displayed on user interface 220 in the form of a table as shown in FIG. 5 or FIG 13 or FIG 15 or FIG 16, and the user interface may then be manipulated to drill down into the clusters for example to review the probability density functions of the cells assigned to those clusters, which may be displayed as shown in FIG. 6 to FIG. 12 (which illustrated probability density functions of connection distance metrics for cells clustered into different clusters as shown in FIG 5). The data representative of the cell clusters may further be displayed on user interface 220 by displaying the cells of the cell clusters as an overlay on a map, which can facilitate the visualisation of the locations of cells assigned to the same cluster.

The displaying of the data representative of the cell clusters on a user interface 220 may facilitate the interaction with the evaluation of the cell clusters to determine diagnostics for the adequacy of the coverage provided by the cells in the cell cluster. For this, the data representative of the cell clusters may be provided by clustering module 218 to cell diagnostics and recommendation module 222 which may be configured to determine diagnostics for the adequacy of the coverage provided by the cells in each cell cluster. The cell diagnostics and recommendation module 222 may be configured to perform other analytics, and may generate one or more suggested changes to the arrangement and configuration of the base stations to improve the adequacy of coverage provided by the radio access network 102.

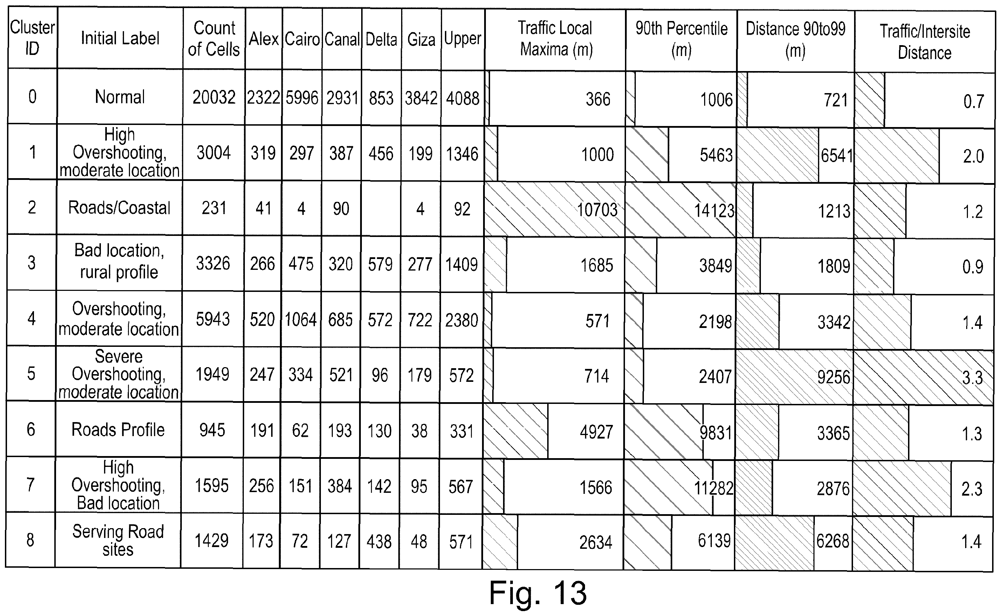

The cell diagnostics and recommendation module 222 may be configured to evaluate the data representative of the cell clusters using a trained classifier to apply diagnostic labels to the cells or the cell cluster based on at least the connection diagnostic features for the cells. For example, as can be seen in FIG. 13, the clusters of the cells may be labelled with initial labels by operation of a trained classifier to automatically identify and apply appropriate diagnostic labels to the clusters.

The diagnostic labels may represent characteristics of the clustered cells such as their siting, or indications of the adequacy or the inadequacy of the coverage provided thereby. For example, the diagnostic labels may indicate whether the cells in the cluster may be located at urban or rural sites, on the coast or serving arterial roads; whether the site is in a good, moderate or poor location; whether the site is blocked; and whether the cell suffers from overspill. The labels applied to cells or cell clusters may also indicate one or more suggested changes to the configuration of the base stations in the radio access network, such as whether a neighbouring site is missing or a new site is needed; whether there may be an antenna configuration error for one or more bands.

The assignment of the diagnostic labels may be automatically applied by the cell diagnostics and recommendation module 222 applying a trained classifier to apply diagnostic labels to the cells or the cell cluster based on at least the connection diagnostic features for the cells. Alternatively, or in addition, the assignment of the diagnostic labels may be added to the clusters by an expert network planner by manual interaction with the user interface 220, to review the connection diagnostic features for the cells and the cell cluster. Manual labelling of the cell clusters with diagnostic labels in this way provides an initial training set for training a classifier, such as a decision tree, random forest, or other ensemble learning algorithm, to learn, from the manually labelled training data, one or more rules for automatically assigning the manually applied diagnostic labels in the training set to newly clustered data at runtime. This training of a classifier based on manual labelling allows the automatic determination of diagnostic labels to be initially applied to the clustered cells, which can then facilitate their analysis by an expert network planner using user interface 220.

Similarly, as will be described below, the cell diagnostics and recommendation module 222 may analyse the clustered and labelled cells and generate one or more suggested changes to the arrangement and configuration of the base stations to improve the adequacy of coverage provided by the radio access network 102.

The rule base applied by the cell diagnostics and recommendation module 222 to determine the diagnostic labels and any suggested changes to the configuration of base stations to improve the adequacy of the coverage may be learned using a machine learning process as described above, or alternatively or in addition, may include manually coded rules based on a knowledge base encoding expert knowledge from one or more expert network planners.

The cell diagnostics and recommendation module 222 may also receive and evaluate data representative of the cell probability density functions, the connection diagnostic features and as well as the data representative of the cell clusters, and perform other diagnostics and analysis thereon. For example, based on this data, the cell diagnostics and recommendation module 222 may determine a diagnostic score representative of the adequacy of the coverage provided by the individual cells or the cell cluster as a whole. Generation of the diagnostic score may be by any appropriate method that captures information representative of the adequacy of coverage. For example, the cell diagnostics and recommendation module 222 may determine a diagnostic score for an individual cell based on a comparison of the probability density function for the cell site with an idealized model for the distribution of connections for the cell site. Another consideration may be to compare the distance at which the traffic maximum occurs with the intersite distance evaluation. Other appropriate diagnostics and analysis may be performed by the cell diagnostics and recommendation module 222.

As will become evident from the examples described below, from this evaluation, in step 1410 shown in FIG 14 (or step 312 shown in FIG 3), one or more suggested changes to the configuration of base stations providing the radio access network may be determined to improve the adequacy of the coverage of the radio access network. These suggested changes may be determined by the cell diagnostics and recommendation module 222 and may be provided for review by the user via user interface 220. For example, where there is significant overspilling or poor acquisition provided as a diagnostic label for a given cell, a suggested change may be generated to add an additional base station at a location near that cell in order to provide user equipment distant from the cell with improved coverage, and to ensure resources are freed to establish stable connections with user equipment near the base station.

Once the diagnostic labels and suggested changes are generated, these can be reviewed by network planners using the user interface 220 to identify and prioritise improvements to the network and to develop more detailed plans for implementing the suggested changes. After making one or more of the suggested changes to the configuration of base stations providing the radio access network to improve the adequacy of the coverage of the radio access network, further propagation delay data can be gathered by the coverage evaluation apparatus 108 for the improved network configuration, and a probability density function for the affected cells from before and after making the suggested changes can be compared to assess an improvement in the adequacy of the coverage of the radio access network.

Examples of the clustering and evaluation of the cells based on receiving, as a connection metric, the propagation delay data, and the generated probability density functions will now be described in more detail with reference to FIG. 5 to FIG. 13. Although the examples are described in relation to connection distance, the principles of clustering and coverage evaluation set out below can be applied equally to other connection metrics revealing different information about the distribution of connections throughout the coverage area.

FIG. 5 shows an example table showing a set of eleven cell clusters produced by coverage evaluation apparatus 108 evaluating the coverage provided by base stations of an example radio access network 102 in accordance with aspects of the disclosure. The eleven clusters are arranged in rows numbered with the cluster number '0' to '11' shown in the first column on the left.

The next seven columns to the right show, in the first column the count of the total number of cells assigned to that cell cluster, followed by a geographic breakdown of the count of the cells of each cluster in six broad geographic regions of the radio access network 102 indicated in the columns headed "Alex", "Cairo", "Canal", "Delta", "Giza" and "Upper". The next five columns show the average value of all of the cells in that cluster for each of the five connection diagnostic features extracted for this clustering analysis by the feature extractor 216.

In the leftmost column, headed "Traffic Local Maxima", the connection diagnostic feature of a distance from the base station to the maxima of the traffic (i.e. the distance having the peak value in the probability density function), averaged for all the cells is shown. This sufficient statistic may be referred to as a "modal distance" as it indicates the location with the highest individual likelihood of a connection being established.

In the next column, headed "median", the connection diagnostic feature of a median distance at which the 50th percentile is located in the probability density function, averaged for all the cells is shown. This sufficient statistic indicates the 'middle distance' at which connections are (on average across all the cells in the cluster) equally likely to be established to the base station nearer and further away than the median distance.

In the next column, headed "90th Percentile", the connection diagnostic feature of a distance to the 90th percentile in the probability density function, averaged for all the cells is shown. This sufficient statistic indicates a nominal boundary distance within which the bulk of connections are established by the cells in the cluster.

In the next column, headed "Distance 90 to 99", the connection diagnostic feature of a distance between the locations of the 90th percentile and the 99th percentile in the probability density function for each cells, averaged for all the cells is shown. This sufficient statistic indicates the distance over which the remaining connections beyond the bulk are spread, revealing whether the probability density function has a long tail of distant connections.

In the last column, headed "Overspilling Ratio", the connection diagnostic feature of the ratio of the distances of the "Distance 90 to 99" and the "90th Percentile" is shown. This statistic indicates the extent to which the cells in the cell cluster are suffering from overshooting, by providing connections to a long tail of user equipments over a distance range much longer than the distance over which the bulk of connections are established.

Probability density functions for example cells contained in certain of the eleven clusters shown in the table in FIG. 5 will now be described with reference to FIG. 6 to FIG. 12.

FIG. 6 shows an example probability density function of a cell assigned to cell cluster 1 shown in FIG. 5. As can be seen from the table in FIG. 5, cluster 1 is the main cluster to which 15675 of the cells, roughly 50% of the total, have been assigned. As can be seen from the connection diagnostic features for this cluster, the average median distance for cells in the cluster is 418 metres, with the average most likely connection modal distance being 344 metres, and 90% of the connections being established on average within 919 metres, with the overspill distance for the last decile of connections being on average only an additional 726 metres. This indicates that the cells in this cluster are have probability density functions of the distribution of their connections that are generally well-confined, serving demand for connections from user equipment locally to the cell site, with little overspill, indicating a good location for the base station and cells within the cell cluster, and an absence of any indication of missing neighbouring cell sites. This is further supported by the example probability density functions shown in FIG. 6 for a cell sector indicated as "G1885_2", in which the probability density function for the 2100 MHz LTE_2100 band 602, 1800 MHz LTE_1800 band 604 and 900 MHz LTE_900 band 606 (all providing connections using the LTE Radio Access Technology) are all well confined, giving connections within around 1200 metres of the base station. Giving the nearness of the connections to the base station, the cells in cell cluster 1 are most likely to be located in a relatively urban setting, where the local density of user equipment is relatively high.

Thus analysis of the cell cluster 1 by the cell diagnostics and recommendation module 222 may lead to the cell cluster 1 being assigned diagnostic labels such as 'normal' and 'good location' by operation of a trained classifier. Alternatively or in addition, these labels may be applied by a network planning expert using user interface 220 to augment labels generated by cell diagnostics and recommendation module 222, or as part of labelling a set of training data to train or further improve the trained classifier. The cell diagnostics and recommendation module 222 may analyse the cells or cell cluster data for cell cluster 1, and generate a diagnostic score indicating the adequacy of coverage provided thereby. As the cell cluster 1 represents the main cluster of cells having a 'normal' and 'good location' label, the diagnostic score will generally be evaluated to be high. Further, the analysis by the cell diagnostics and recommendation module 222 may not recommend any suggested changes for these cells as they have been assessed to be providing 'normal' and adequate coverage.

FIG. 7 shows an example probability density function of a cell assigned to cell cluster 0 shown in FIG. 5. As can be seen from the table in FIG. 5, cluster 0 is a small cluster to which 1093 of the cells, roughly 4% of the total, have been assigned. As can be seen from the connection diagnostic features for this cluster, the average median distance for cells in the cluster is 2947 metres (much longer than for cluster 1), with the average most likely connection modal distance being 2490 metres, and 90% of the connections being established on average within 6197 metres, with the overspill distance for the last decile of connections being on average an additional 6544 metres. This indicates that the cells in this cluster are have probability density functions of the distribution of their connections that are spread out over a wide geographical area, serving demand for connections from user equipment over a range of distances from the cell site. As the distance covered by connections in the last decile is greater than the distance within which the 90th percentile is contained, the overspill ratio is high, at 1.1.

This indicates that the base stations in cell cluster 0 are likely to be located in rural sites, where the density of user equipment requiring connections is lower. However, the signal acquisition in the coverage area may be sub-optimal, not least because the high level of overspill indicates that the base station may be missing neighbouring cell sites. This is illustrated by the example probability density functions shown in FIG. 7 for a cell sector indicated as "G3389_1", in which the probability density function for the 2100 MHz LTE_2100 band 602 and 900 MHz LTE_900 band 606 are spread out with the main body of connections occurring within a longer range distance of 8000 metres from the base station. As can be seen, the cell sector is suffering significant overspill 702 in both the LTE_2100 band 602 and LTE_900 band 606 with a long tail of connections being established up to around 16000 metres from the base station.

Thus analysis of the cell cluster 0 by the cell diagnostics and recommendation module 222 may lead to the cell cluster 0 being assigned diagnostic labels such as 'rural site', 'sub-optimal acquisition' and 'high overspill' by operation of a trained classifier. The cell diagnostics and recommendation module 222 may further analyse the cells or cell cluster data for cell cluster 0, and generate a diagnostic score indicating the adequacy of coverage provided thereby. As the cell cluster 0 represents the rural cluster of cells having a 'sub-optimal acquisition' and 'high overspill' label, the diagnostic score will generally be evaluated to be low. Further, the analysis by the cell diagnostics and recommendation module 222 may recommend suggested changes for these cells of assessing whether neighbouring cell sites are missing. Further detailed analysis of the individual cells in cell cluster 0 with this suggested change will facilitate the identification of changes which may improve the adequacy of the coverage of the radio access network 102 by including additional base stations, thereby reducing overspill in the mainly rural cells clustered in cell cluster 0.

For example, the cell diagnostics and recommendation module 222 may apply analytics and rules to label a cell as potentially being poorly located, and suggest a change of requiring an additional neighbouring cell site, based on one or more of an overspill ratio for the cell or the cell cluster being greater than 1, a modal distance or a median distance being greater than 2km, a maximum distance being greater than 10km.

It should be noted from Figure 5 that the connection diagnostic features of cell cluster 9 are similar to that of cell cluster 0, without suffering from overspill. Thus cell cluster 9 may be labelled as 'normal' and a 'rural site', without any configuration changes being suggested as the coverage of the cells in this mainly rural cluster may be seen as being 'adequate'.

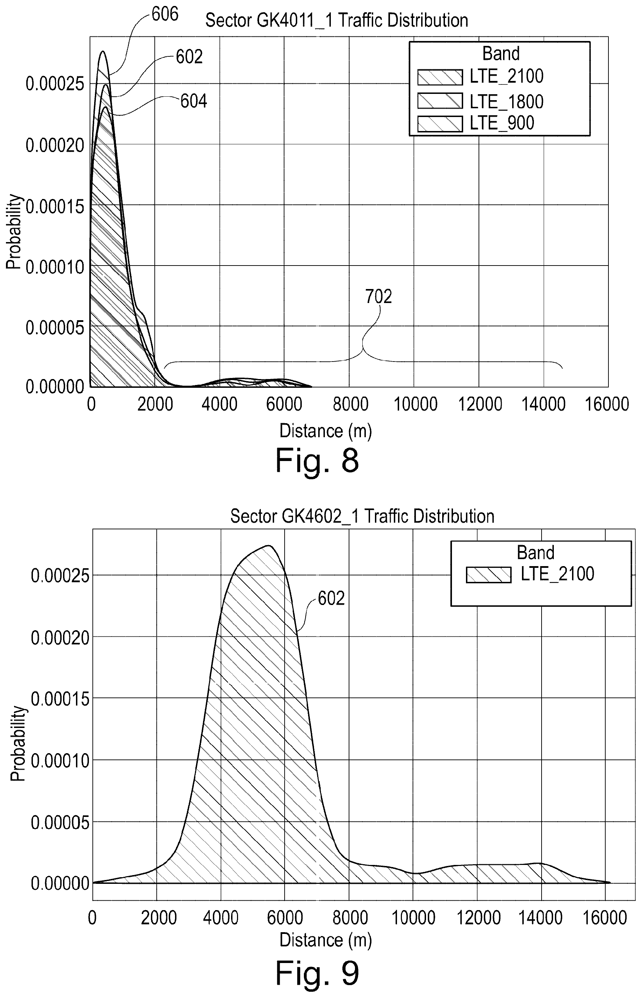

FIG. 8 shows an example probability density function of a cell assigned to cell cluster 10 shown in FIG. 5, which contains 3733 cells, around 12% of the total. Here, the connection diagnostic features for the cell cluster 10 are similar to the 'normal' cell cluster 1, but the overspill ratio is very high, with a value of 2.0, and the average distance from the 90th to 99th percentile being 3710 metres compared to the average distance to the 90th percentile being 1880 metres.

This is illustrated by the probability density functions shown in FIG. 8 which show for the 2100 MHz LTE_2100 band 602, 1800 MHz LTE_1800 band 604 and 900 MHz LTE_900 band 606 that the vast majority of wireless connections within a well confined range of around 2000 metres from the base station. However, as can also be seen, each of the three bands is suffering from significant overspill 702, with a long tail of connections being established at distances up to around 14000 metres from the base station. This indicates that although the base station is likely well-located in a relative urban site, there is significant signal acquisition at locations distant to the base station. The evaluation by the cell diagnostics and recommendation module 222 may assign the cell cluster diagnostic labels of 'good location', 'high overspill' and make the suggested change of 'new neighbouring sites needed'. A suggested change of 'reducing the signal power' may also be generated, as a way of reducing signal acquisition by user equipment at locations distant from the base station.

FIG. 9 shows an example probability density function of a cell assigned to cell cluster 4 shown in FIG. 5, containing 705 cells, around 2% of the total. As can be seen from the connection diagnostic features for this cluster, the average median distance for cells in the cluster is 5140 metres, with the average most likely connection modal distance being 4908 metres. This is illustrated by the probability density functions shown in FIG. 9 which shows for the sole 2100 MHz LTE_2100 band 602 that the vast majority of wireless connections are well constrained within a distance range of 3000 metres to 7000 metres from the base station, with very few or no connections being established at locations near the cell site. Thus in this cell cluster, the main body of the wireless traffic is located far away from the cell site. It is possible that the cells in these cell clusters are serving user equipment located on roads distant from the base station. Nevertheless, this is indicative that the cell may be at a bad site location. Thus the evaluation by the cell diagnostics and recommendation module 222 may assign the cell cluster diagnostic labels of 'road site' and 'bad location'. The suggested changes generated may include considering decommissioning the cell site or redirecting the cell.

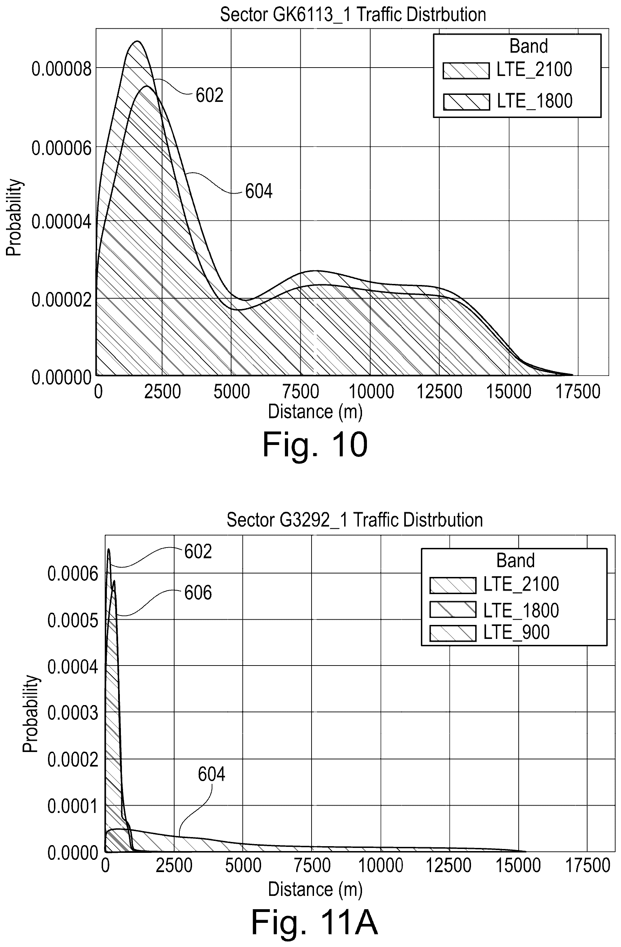

FIG. 10 shows an example probability density function of a cell assigned to cell cluster 5 shown in FIG. 5, containing 1152 cells, or 4% of the total. As can be seen from the connection diagnostic features for this cluster, the average median distance for cells in the cluster is a long distance at 3555 metres, and the average 90th percentile distance is at an even longer distance of 11406 metres. This indicates that the cell coverage is spread over a very wide area. This is illustrated by the probability density functions shown in FIG. 10 which shows for the 2100 MHz LTE_2100 band 602 and the 1800 MHz LTE_1800 band 604 that a local body of wireless connections are formed within a distance of around 2500 metres, but that beyond that, wireless connections are established over distances ranging out to 15000 metres. Overspill in the last decile is relatively low, but the spread of connections over a wide range of distances in this cell cluster indicates that the location of the base station is moderate and not ideal, and that new neighbouring sites are needed to better serve the user equipment at these relatively distant locations that are acquiring the signal from the base station.

Thus the evaluation by the cell diagnostics and recommendation module 222 may assign the cell cluster diagnostic labels of 'moderate location', 'coverage spread over wide range'. The suggested changes generated may include applying a label of 'new neighbouring sites needed'.

FIG. 11A shows an example probability density function of a cell with different bands assigned to different cell clusters. That is, the analysis by the cell diagnostics and recommendation module 222 may compare the cell clusters for each band served by a cell to identify cells having different coverage characteristics for different bands in the same cell, indicating that the base station may be configured differently for different bands in the same cell.

This is illustrated by the probability density functions shown in FIG. 11A for the three different bands of the cell sector "G3292_1" which shows the 2100 MHz LTE_2100 band 602 and the 900 MHz LTE_900 band 606 having very similar distributions of relatively well confined cells in the 'normal' cell cluster 1 serving having established connections with user equipment within around 1000 metres from the base station. However, for the 1800 MHz LTE_1800 band 604, it can be seen that the probability density function has a completely different profile having established connections more uniformly distributed throughout a distance range from 0 metres to 15000 metres from the base station, this band being assigned to cell cluster 5.

This cell, or in particular the 1800 MHz LTE_1800 band 604 for this cell may be labelled by the cell diagnostics and recommendation module 222 as having "an antenna configuration error for one or more bands". A suggested change for this cell may be to adjust the antenna in terms of pointing direction, tilt and power for the 1800 MHz LTE_1800 band 604. In this way, cells for which the coverage does not provide optimal load balancing between the different bands in the same cell can be easily identified, and their configuration adjusted to allow the load balancing to be optimised.

Similarly, where multiple different bands are in a cell across different Radio Access Technologies (RATs) supported by the same base station, the cell diagnostics and recommendation module 222 may determine an overlap between the probability density functions generated for each band of different Radio Access Technologies in the same cell. In this way the cell diagnostics and recommendation module 222 may identify cells having different coverage characteristics for different Radio Access Technologies in the same cell. The cell diagnostics and recommendation module 222 may in this way label the cell as suffering from "problems falling back to different Radio Access Technologies". Again, a suggested change for such a cell may be to adjust the antenna in terms of pointing direction, tilt and power for the different bands and Radio Access Technologies to ensure reliable fall back to different RATs.

In this way, analysing and clustering the probability density functions for different bands and Radio Access Technologies in the same cell in this way allows for configuration errors to be diagnosed, and for the configuration of cells to be improved to ensure the arrangement of coverage and fallback between the different bands is optimal.

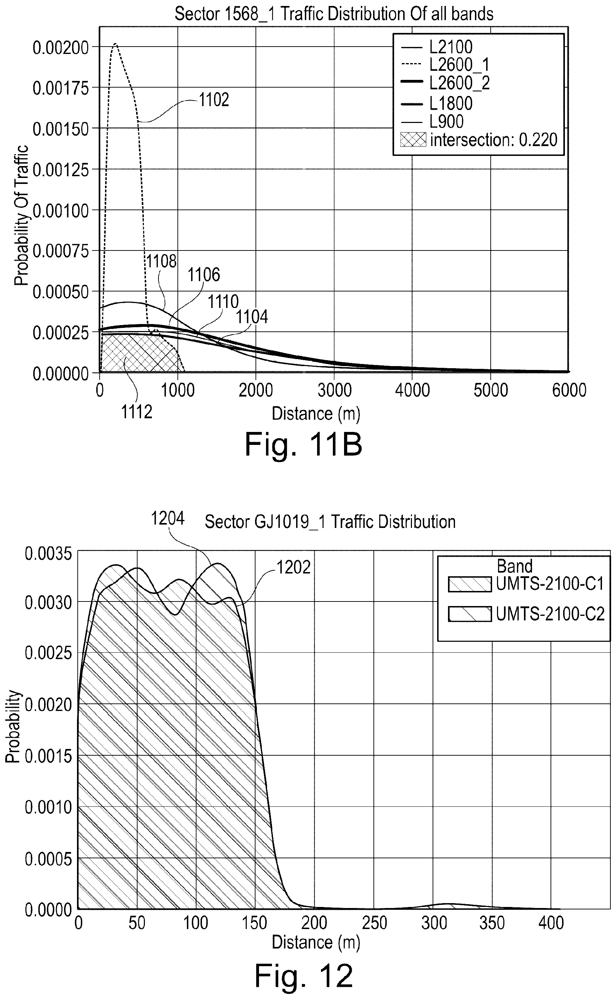

FIG. 11B shows an example probability density function of a cell illustrating the determination of an overlap between the coverage of different bands having different distributions.

This is illustrated by the probability density functions shown in FIG. 11B for the five different bands of the cell sector "1568_1" which shows the 2100 MHz LTE_2100 band 602 having a relatively well confined distribution having established connections with user equipment within around 500 metres from the base station. However, for all of the other bands served by the base station in the sector, including the 1800 MHz LTE_1800 band 604, the 900 MHz LTE_900 band 606, the 2600 MHz LTE_2600_1 band 1102 and the 2600 MHz LTE_2600_2 band 1104, it can be seen that the probability density function has a completely different profile having established connections more uniformly distributed throughout a distance range from 0 metres to 2000 metres from the base station. To determine an overlap between the cells, which may be used as a further diagnostics metric for further analysis or for clustering, the cell diagnostics and recommendation module 222 may determine an intersection 1112 between the probability density functions generated for each band of different Radio Access Technologies in the same cell. The intersection 1112 may be a simple integral of the probability densities that are common to the probability density functions for at least two or all of the bands of the different Radio Access Technologies in the same sector. In the example shown, the intersection 1112 between all of the bands in the sector is very low, at only 0.220, indicating that there are significant differences in the distributions of connections for different bands in the same cell.

FIG. 12 shows an example probability density function of a cell assigned to a cell cluster being assigned the diagnostic label of 'suspected blocked cell'. This cell cluster is not shown in the table in FIG. 5, but cells in this cluster may be identified by one or more manual rules, such as a maximum connection distance of less than half of the minimum intersite distance, an overspill ratio of less than 0.2, or a maximum distance of less than 300m. Alternatively, the cells in this cluster may be discovered by unsupervised clustering algorithm implemented by clustering module 218, which may cluster the cells based on similar rules derived automatically by machine learning.

This is illustrated by the probability density functions shown in FIG. 12 for the three different bands of the cell sector "GJ1019_1" which shows the 2100 MHz UMTS_2100_C1 Band 1202 and UMTS_2100_C2 Band 1204 having distributions of established wireless connections which suddenly terminate at a very short distance of 200 metres from the base station. Unless they are indoor sites, this indicates that the cell is likely to be blocked. As a result, the cell diagnostics and recommendation module 222 may label the cells in this cell cluster with the diagnostic label of 'suspected blocked cell', and may suggest one or more changes including removing blockage or moving the site.

FIG. 13 shows an example of another set of cell clusters produced by coverage evaluation apparatus 108 evaluating the coverage provided by different set of base stations of cellular radio access network 102, the cell clusters having had diagnostic labels applied by a trained classifier by cell diagnostics and recommendation module 222. As can be seen, by training the classifier on labelled data, the cell clusters can be automatically labelled with diagnostic labels.

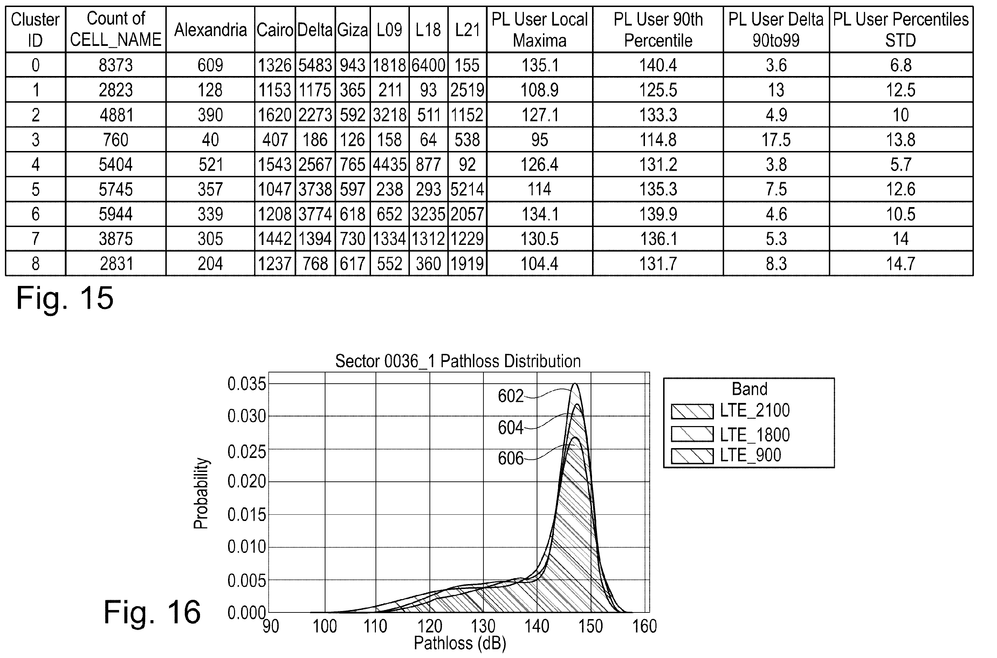

FIG. 15 shows an example of another set of cell clusters produced by coverage evaluation apparatus 108 evaluating the coverage provided a set of base stations of cellular radio access network 102, based on a receiving path loss data (in terms of dB) as a connection metric, with the connection diagnostic features relating to path loss being determined and used as the basis for clustering into the nine clusters identified as cluster IDs 0-8. As can be seen, the clustering has been performed based on the connection diagnostic features in the four rightmost columns, from left to right, of the path loss with the peak likelihood in the probability density function (i.e. the Path Loss User Local Maximum), 90th percentile path loss, the

difference between the 90th and 99th percentile path loss, and the standard deviation in the path loss.

FIG. 16 shows an example probability density function of a cell assigned to cell cluster 0 shown in FIG. 15. As can be seen from the table in FIG. 15, cluster 0 is the largest cluster to which 8373 of the cells, roughly 21% of the total, have been assigned. As can be seen from the connection diagnostic features for this cluster, the average most likely connection modal path loss is 135.1 dB, with 90% of the connections being established having a path loss on average of 140.4 dB or less, with the overspill pathloss for the last decile of connections being on average only an additional 3.6 dB. This indicates that the cells in this cluster are have probability density functions of the distribution of their connections that are generally well-confined at path losses around 135 dB, with little overspill, indicating that the majority of the cells being served experience a similar path loss. This is further supported by the example probability density functions shown in FIG. 16 for a cell sector indicated as "0036_1", in which the probability density function for the 2100 MHz LTE_2100 band 602, 1800 MHz LTE_1800 band 604 and 900 MHz LTE_900 band 606 (all providing connections using the LTE Radio Access Technology) are all well confined, giving connections with path losses close to around 147 dB.

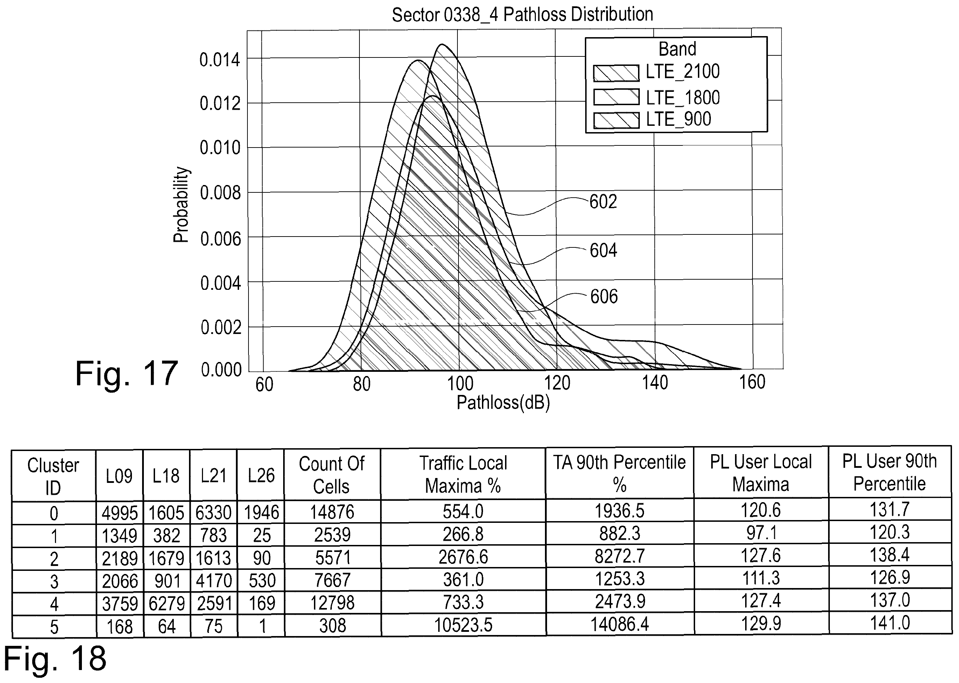

FIG. 17 shows an example probability density function of a cell assigned to cell cluster 3 shown in FIG. 15. As can be seen from the table in FIG. 15, cluster 3 is the smallest cluster to which 760 of the cells, roughly 2% of the total, have been assigned. As can be seen from the connection diagnostic features for this cluster, the average most likely connection modal path loss is 95 dB, with 90% of the connections being established having a path loss on average of 114.8 dB or less, with the overspill pathloss for the last decile of connections being on average an additional 17.5 dB. This indicates that the cells in this cluster are have probability density functions of the distribution of their connections that are spread out over a wide range of path losses, serving connections from user equipment over a wide range of path losses from the cell site. This is illustrated by the example probability density functions shown in FIG. 17 for a cell sector indicated as "0338_4", in which the probability density function for the 2100 MHz LTE_2100 band 602 and 900 MHz LTE_900 band 606 are spread out with the main body of connections occurring with path losses ranging from around 80 dB to around 120 dB.

In this way, the cell clusters can be analysed by the cell diagnostics and recommendation module 222 to determine diagnostics for the adequacy of the coverage provided by the cells in the cell cluster, clustered by connection diagnostic features generated from the path loss probability density functions. The cell diagnostics and recommendation module 222 may then perform other analytics, and generate one or more suggested changes to the arrangement and configuration of the base stations to improve the adequacy of coverage provided by the radio access network 102.

FIG. 18 shows an example of another set of cell clusters produced by coverage evaluation apparatus 108 evaluating the coverage provided a set of base stations of cellular radio access network 102, based on a receiving both timing advance data (converted to connection distance in terms of metres) and path loss data (in terms of dB) as connection metrics, with the connection diagnostic features relating to both connection distance and path loss being determined and used as the basis for clustering into the six clusters identified as cluster IDs 0-5. As can be seen, the clustering has been performed based on the connection diagnostic features in the four rightmost columns, from left to right, of the connection distance with the peak likelihood in the probability density function (i.e. the Traffic Local Maximum), 90th percentile connection distance, path loss with the peak likelihood in the probability density function (i.e. the Path Loss User Local Maximum) and the 90th percentile path loss.

As the diagnostic labels can be automatically applied based on a classification of the clustered cells, this can facilitate the analysis of the cells and an identification of the suggested changes to the configuration of base stations to improve the adequacy of the coverage.

Thus, by operation of the coverage evaluation apparatus 108 by a network planner using the user interface 220, interaction with the analysis, clustering and labelling of the cells using the probability density functions showing the distribution of the connection distances for the cells greatly facilitates the identification of cells which may not be providing adequate coverage. For example, the coverage evaluation by the coverage evaluation apparatus 108 facilitates the identification of one or more changes that can be made to the radio access network to improve the coverage provided thereby, such that the connection stability and quality of service is improved in areas of inadequate coverage. Further, the coverage evaluation by the coverage evaluation apparatus 108 facilitates the identification of one or more changes that can be made to the radio access network to avoid the overprovision of network resources in areas where the adequacy of the coverage would not be impaired by reducing the network resources provided.

Features, integers, characteristics or groups described in conjunction with a particular aspect, embodiment or example of the invention are to be understood to be applicable to any other aspect, embodiment or example described herein unless incompatible therewith.

**Claims**

1. A method for use in evaluating the coverage provided by base stations (104a, 104b) of a cellular radio access network (102), comprising:

   receiving, for cells provided by base stations (104a, 104b) of a radio access network (102), data representative of a connection metric reported by each base station (104a, 104b) for user equipment (106a-i) having an established connection to one of the base stations (104a, 104b), the connection metric being collected over an operation period of the radio access network (102) for all connections, the collected connection metric data for each base station (104a, 104b) being indicative of a distribution of connections throughout the coverage area for that base station (104a, 104b);
   generating, for each cell, data representative of a normalised frequency distribution of the connection metric between the base station (104a, 104b) and the user equipment (106a-i) connected to the base station (104a, 104b) over the operation period, the normalised frequency distribution representing a probability density function for the connection metric;
   determining, for each cell, a set of connection diagnostic features from the probability density function of the connection metric, the connection diagnostic features being selected to indicate characteristics of the distribution of the connection metric in the coverage area provided by the cells;
   **characterized by** further comprising:

   using an unsupervised machine learning algorithm, clustering cells based on the determined connection diagnostic features for the cells into clusters of similar distributions of the connection metric, the data representative of the cell clusters being evaluated to determine diagnostics for the adequacy of the coverage provided by the cells in the cell cluster; and
   determining, based on the evaluation of the cell clusters, one or more suggested changes to the configuration of base stations (104a, 104b) providing the radio access network (102) to improve the adequacy of the coverage of the radio access network (102).

2. The method of claim 1, further comprising:

   receiving data representative of one or more further different connection metrics, each connection metric being indicative of a different quality of the connections as they are distributed throughout the coverage area for a base station (104a, 104b);
   generating a normalized frequency distribution for each connection metric for each cell, representative of a probability density function for that metric;

determining, for each cell, a set of connection diagnostic features from the probability density function for each connection metric;

wherein the clustering of the cells using an unsupervised machine learning algorithm is based on the determined connection diagnostic features based on each connection metric.

3. The method of claim 1 or 2, wherein the or each connection metric is representative of one of:

a propagation delay for signals received at the base stations (104a, 104b) from user equipment (106a-1) having an established connection to one of the base stations (104a, 104b);

a path loss for signals received at the base stations (104a, 104b) from user equipment (106a-i) having an established connection to one of the base stations (104a, 104b);

an available power headroom for connections to user equipment (106a-i) having an established connection to one of the base stations (104a, 104b);

a transmission power for connections to user equipment (106a-1) having an established connection to one of the base stations (104a, 104b);

a signal to noise ratio for connections to user equipment (106a-1) having an established connection to one of the base stations (104a, 104b);

an interference for connections to user equipment (106a-i) having an established connection to one of the base stations (104a, 104b).

4. The method of claim 3, further comprising:

if data representative of a propagation delay is received, converting, for each cell provided by the base stations (104a, 104b), the data representative of a propagation delay to a distance between the base station (104a, 104b) and the connected user equipment (106a-i);

generating, for each cell, data representative of a normalised frequency distribution of the connection distance between the base station (104a, 104b) and the user equipment (106a-i) connected to the base station (104a, 104b) over the operation period, the normalised frequency distribution representing a probability density function for the connection distance to user equipment (106a-1) in the cell;

optionally wherein the data representative of a propagation delay comprises a timing advance reported by the base stations (104a, 104b) for user equipment (106a-i) connected to the base station (104a, 104b).

5. The method of any preceding claim, wherein the received data representative of a connection metric is binned, and wherein generating the normalised frequency distribution comprises:

randomly allocating each received connection metric data to a non-binned value within the range of its respective bin.

6. The method of any preceding claim, wherein determining, for each cell, a set of connection diagnostic features from the probability density function of the connection metric comprises determining one or more of:

determining, from the probability density function, a modal connection metric value at which a maximum occurs in the probability density function;

determining, from the probability density function, one or more connection metric values within which a connection is likely to occur to a given probability from the probability density function;

determining, from the probability density function, a median connection metric value at which connection is likely to occur with a 50% probability;

determining, from the probability density function, an overspill connection metric value as a difference between the threshold connection metric value within which connection is likely to occur to a given threshold probability and a maximum connection metric value within which connection is likely to occur to a maximum probability;

determining an overspill ratio as the ratio of the overspill connection metric value to the threshold connection metric value;

optionally wherein the threshold probability is 90% and wherein the maximum probability is 99%.

7. The method of any preceding claim, wherein one or more of the connection diagnostic features determined from the probability density function of the connection metric is a sufficient statistic summarising all of the information in the data representative of the connection metric for the signals received at the base stations about a population parameter the statistic represents.

8. The method of any preceding claim, wherein the data representative of the connection metric is received for multiple different bands served in each cell, and wherein a probability density function and set of connection diagnostic features are generated for each band separately, the cells being clustered for each band served by that cell separately, based on the sets of connection diagnostic features generated for each band;

optionally further comprising comparing the cell clusters for each band served by a cell to identify cells having different coverage characteristics for different bands in the same cell, indicating that the base station may be configured differently for different bands in the same cell; optionally further comprising determining an overlap between the probability density functions generated for each band in the same cell, and determining one or more suggested changes to the configuration of the base station to optimise load balancing between the different bands in the same cell; optionally wherein the data representative of a connection metric is received for multiple different bands served in each cell across different Radio Access Technologies, RATs, supported by the base stations (104a, 104b), the method optionally further comprising determining an overlap between the probability density functions generated for each band of different Radio Access Technologies in the same cell to identify cells having different coverage characteristics for different Radio Access Technologies in the same cell, indicating that user equipment in the cell may experience connection problems with falling back to different Radio Access Technologies.

9.  The method of any preceding claim, further comprising:

    receiving topological data including location information for the base stations (104a, 104b) in the radio access network (102);
    determining, based on the topological data, for each cell, one or more intersite distance features based on the distance between the base station (104a, 104b) providing the cell, and one or more other base stations (104a, 104b) located in the cell;
    wherein clustering cells is further based on the determined intersite distance features for each cell.

10. The method of any preceding claim, further comprising labelling a cell or a cell clusters with one or more diagnostic labels based on connection diagnostic features for cells in each cell cluster;

    optionally, when dependent on claim 3, further comprising labelling a cell as a potential blocked cell based on one or more of:

        the maximum connection distance being less than a threshold proportion of the minimum intersite distance;
        the overspill ratio being less than a threshold value;
        the maximum distance being less than a threshold value;

    optionally, when dependent on claim 3, further comprising labelling a cell as potentially being poorly located, requiring an additional neighbouring cell site, or requiring antenna realignment based on one or more of:

        an overspill ratio being greater than a threshold value;
        a modal distance or a median distance being greater than a threshold value;
        a maximum distance being greater than a threshold value.

11. The method of any preceding claim, further comprising evaluating the data representative of the cell clusters to determine diagnostics for the adequacy of the coverage provided by the cells in the cell cluster, the evaluating comprising one or more of:

        using a trained classifier to apply diagnostic labels to the cells or the cell cluster based on at least the connection diagnostic features for the cells;
        determining a diagnostic score representative of the adequacy of the coverage provided by the cells.

12. The method of any preceding claim, further comprising displaying the cells of the cell clusters as an overlay on a map.

13. The method of any preceding claim, further comprising making one or more of the suggested changes to the configuration of base stations (104a, 104b) providing the radio access network (102) to improve the adequacy of the coverage of the radio access network (102); and
    comparing a probability density function for the affected cells before and after making the suggested changes to assess an improvement in the adequacy of the coverage of the radio access network (102).

14. A computing apparatus (108) comprising:

        a processor; and
        a memory storing instructions that, when executed by the processor, configure the apparatus (108) to perform the method of any preceding claim.

15. A computer-readable storage medium, the computer-readable storage medium including instructions that when executed by a computer, cause the computer to perform the method of any of claims 1 to 13.

**Patentansprüche**

1. Verfahren zur Verwendung bei der Bewertung der von Basisstationen (104a, 104b) eines zellularen Mobilfunknetzes (102) bereitgestellten Versorgung, umfassend:

     Empfangen, für von Basisstationen (104a, 104b) eines Mobilfunknetzes (102) bereitgestellte Zellen, von Daten, die eine Verbindungsmetrik repräsentieren, die von jeder Basisstation (104a, 104b) für Benutzergeräte (106a-i) mit einer bestehenden Verbindung zu einer der Basisstationen (104a, 104b) gemeldet wird, wobei die Verbindungsmetrik über einen Betriebszeitraum des Mobilfunknetzes (102) für alle Verbindungen erfasst wird, wobei die erfassten Verbindungsmetrikdaten für jede Basisstation (104a, 104b) eine Verteilung von Verbindungen im gesamten Versorgungsgebiet für diese Basisstation (104a, 104b) angeben;
     Erzeugen, für jede Zelle, von Daten, die repräsentativ für eine Verteilung der normierten Frequenz der Verbindungsmetrik zwischen der Basisstation (104a, 104b) und den mit der Basisstation (104a, 104b) verbundenen Benutzergeräten (106a-i) über den Betriebszeitraum sind, wobei die Verteilung der normierten Frequenz eine Wahrscheinlichkeitsdichtefunktion für die Verbindungsmetrik repräsentiert;
     Bestimmen, für jede Zelle, eines Satzes an Verbindungsdiagnosemerkmalen aus der Wahrscheinlichkeitsdichtefunktion der Verbindungsmetrik, wobei die Verbindungsdiagnosemerkmale ausgewählt werden, um die Eigenschaften der Verteilung der Verbindungsmetrik in dem durch die Zellen bereitgestellten Versorgungsgebiet anzugeben;
     **dadurch gekennzeichnet, dass** es ferner umfasst:

     mittels eines Algorithmus für unüberwachtes maschinelles Lernen, Bündeln von Zellen auf Basis der bestimmten Verbindungsdiagnosemerkmale der Zellen in Cluster mit ähnlichen Verteilungen der Verbindungsmetrik, wobei die für die Zellcluster repräsentativen Daten bewertet werden, um eine Diagnose hinsichtlich der Angemessenheit der von den Zellen in dem Zellcluster bereitgestellten Versorgung zu bestimmen; und
     Bestimmen, auf Basis der Bewertung der Zellcluster, einer oder mehrerer vorgeschlagener Änderungen an der Konfiguration von Basisstationen (104a, 104b), die das Mobilfunknetz (102) bereitstellen, um die Angemessenheit der Versorgung des Mobilfunknetzes (102) zu verbessern.

2. Verfahren nach Anspruch 1, ferner umfassend:

     Empfangen von Daten, die repräsentativ für eine oder mehrere weitere unterschiedliche Verbindungsmetriken sind, wobei jede Verbindungsmetrik eine unterschiedliche Qualität der Verbindungen angibt, wie sie über das Versorgungsgebiet einer Basisstation (104a, 104b) verteilt sind;
     Erzeugen einer Verteilung der normierten Frequenz für jede Verbindungsmetrik für jede Zelle, repräsentativ für eine Wahrscheinlichkeitsdichtefunktion für diese Metrik;
     Bestimmen, für jede Zelle, eines Satzes von Verbindungsdiagnosemerkmalen aus der Wahrscheinlichkeitsdichtefunktion für jede Verbindungsmetrik;
     wobei das Clustern von Zellen mittels eines Algorithmus für unüberwachtes maschinelles Lernen auf den bestimmten Verbindungsdiagnosemerkmalen auf Basis jeder Verbindungsmetrik basiert.

3. Verfahren nach Anspruch 1 oder 2, wobei die oder jede Verbindungsmetrik repräsentativ ist für eines von:

     einer Übertragungsverzögerung für Signale, die an den Basisstationen (104a, 104b) von Benutzergeräten (106a-i) mit einer bestehenden Verbindung zu einer der Basisstationen (104a, 104b) empfangen wurden;
     einem Pfadverlust für Signale, die an den Basisstationen (104a, 104b) von Benutzergeräten (106a-i) mit einer bestehenden Verbindung zu einer der Basisstationen (104a, 104b) empfangen wurden;
     verfügbare Leistungsreserven für Verbindungen zu Benutzergeräten (106a-i) mit einer bestehenden Verbindung zu einer der Basisstationen (104a, 104b);
     einer Sendeleistung für Verbindungen zu Benutzergeräten (106a-i) mit einer bestehenden Verbindung zu einer der Basisstationen (104a, 104b);
     einem Signal-Rausch-Verhältnis für Verbindungen zu Benutzergeräten (106a-i) mit einer bestehenden Verbindung zu einer der Basisstationen (104a, 104b);
     einer Interferenz für Verbindungen zu Benutzergeräten (106a-i) mit einer bestehenden Verbindung zu einer der Basisstationen (104a, 104b).

4. Verfahren nach Anspruch 3, ferner umfassend:

     wenn Daten empfangen werden, die repräsentativ für eine Übertragungsverzögerung sind, Umwandeln, für jede durch die Basisstationen (104a, 104b) bereitgestellte Zelle, der für eine Übertragungsverzögerung repräsentativen Daten in eine Entfernung zwischen der Basisstation (104a, 104b) und den verbundenen Benutzergeräten (106a-i);

Erzeugen, für jede Zelle, von Daten, die repräsentativ für eine Verteilung der normierten Frequenz der Verbindungsentfernung zwischen der Basisstation (104a, 104b) und den mit der Basisstation (104a, 104b) verbundenen Benutzergeräten (106a-i) über den Betriebszeitraum sind, wobei die Verteilung der normierten Frequenz eine Wahrscheinlichkeitsdichtefunktion für die Verbindungsentfernung zu Benutzergeräten (106a-i) in der Zelle repräsentiert;

wobei optional die für eine Übertragungsverzögerung repräsentativen Daten eine Vorhaltezeit umfassen, die von den Basisstationen (104a, 104b) für mit der Basisstation (104a, 104b) verbundene Benutzergeräte (106a-i) gemeldet wird.

5. Verfahren nach einem vorstehenden Anspruch, wobei die empfangenen für eine Verbindungsmetrik repräsentativen Daten eingeteilt werden und wobei das Erzeugen der Verteilung der normierten Frequenz umfasst:

zufälliges Zuordnen der empfangenen Daten jeder Verbindungsmetrik zu einem nicht eingeteilten Wert innerhalb des Bereichs der jeweiligen Einteilung.

6. Verfahren nach einem vorstehenden Anspruch, wobei das Bestimmen, für jede Zelle, eines Satzes von Verbindungsdiagnosemerkmalen aus der Wahrscheinlichkeitsdichtefunktion der Verbindungsmetrik das Bestimmen eines oder mehrerer umfasst von:

Bestimmen, aus der Wahrscheinlichkeitsdichtefunktion, eines modalen Verbindungsmetrikwerts, bei dem ein Maximalwert in der Wahrscheinlichkeitsdichtefunktion auftritt;

Bestimmen, aus der Wahrscheinlichkeitsdichtefunktion, eines oder mehrerer Verbindungsmetrikwerte, innerhalb derer eine Verbindung wahrscheinlich mit einer bestimmten Wahrscheinlichkeit aus der Wahrscheinlichkeitsdichtefunktion auftritt;

Bestimmen, aus der Wahrscheinlichkeitsdichtefunktion, eines durchschnittlichen Verbindungsmetrikwerts, bei dem eine Verbindung wahrscheinlich mit einer Wahrscheinlichkeit von 50 % auftritt;

Bestimmen, aus der Wahrscheinlichkeitsdichtefunktion, eines Überschussverbindungsmetrikwerts als Unterschied zwischen dem Schwellenverbindungsmetrikwert, innerhalb dessen eine Verbindung wahrscheinlich mit einer bestimmten Schwellenwahrscheinlichkeit auftritt, und einem maximalen Verbindungsmetrikwert, innerhalb dessen eine Verbindung wahrscheinlich mit einer maximalen Wahrscheinlichkeit auftritt;

Bestimmen eines Überschussverhältnisses als das Verhältnis des Überschussverbindungsmetrikwerts zum Schwellenverbindungsmetrikwert;

wobei optional die Schwellenwahrscheinlichkeit 90 % und die maximale Wahrscheinlichkeit 99 % beträgt.

7. Verfahren nach einem vorstehenden Anspruch, wobei eines oder mehrere der Verbindungsdiagnosemerkmale, die aus der Wahrscheinlichkeitsdichtefunktion der Verbindungsmetrik bestimmt wurden, eine ausreichende Statistik ist, die alle Informationen in den für die Verbindungsmetrik repräsentativen Daten für die an den Basisstationen empfangenen Signale über einen Grundgesamtheitsparameter zusammenfasst, den die Statistik repräsentiert.

8. Verfahren nach einem vorstehenden Anspruch, wobei die für die Verbindungsmetrik repräsentativen Daten für mehrere unterschiedliche Bänder empfangen werden, die in jeder Zelle versorgt werden, und wobei eine Wahrscheinlichkeitsdichtefunktion und ein Satz von Verbindungsdiagnosemerkmalen für jedes Band separat erzeugt werden, wobei die Zellen für jedes Band, das durch diese Zelle versorgt wird, separat gebündelt werden, auf Basis der Sätze der für jedes Band erzeugten Verbindungsdiagnosemerkmale;

optional ferner umfassend das Vergleichen der Zellcluster für jedes Band, das durch eine Zelle versorgt wird, um Zellen mit unterschiedlichen Versorgungseigenschaften für unterschiedliche Bänder in derselben Zelle zu identifizieren, was darauf hinweist, dass die Basisstation möglicherweise für unterschiedliche Bänder in derselben Zelle unterschiedlich konfiguriert ist; optional ferner umfassend das Bestimmen einer Überlappung zwischen den für jedes Band in derselben Zelle erzeugten Wahrscheinlichkeitsdichtefunktionen und Bestimmen einer oder mehrerer vorgeschlagener Änderungen an der Konfiguration der Basisstation, um den Lastausgleich zwischen den unterschiedlichen Bändern in derselben Zelle zu optimieren; wobei optional die für eine Verbindungsmetrik repräsentativen Daten für mehrere unterschiedliche Bänder empfangen werden, die über unterschiedliche von den Basisstationen (104a, 104b) unterstützte Funkzugangstechnologien (Radio Access Technologies, RATs) in jeder Zelle versorgt werden, wobei das Verfahren optional ferner umfasst, dass eine Überlappung zwischen den Wahrscheinlichkeitsdichtefunktionen bestimmt wird, die für jedes Band unterschiedlicher Funkzugangstechnologien in derselben Zelle erzeugt werden, um Zellen mit unterschiedlichen Versorgungseigenschaften für unterschiedliche Funkzugangstechnologien in derselben Zelle zu identifizieren, was darauf hinweist, dass für das Benutzergerät in der Zelle möglicherweise Verbindungsprobleme beim Zurückgreifen auf unterschiedliche Funkzugangstechnologien auftreten.

9. Verfahren nach einem vorstehenden Anspruch, ferner umfassend:

   Empfangen topologischer Daten beinhaltend Standortinformationen für die Basisstationen (104a, 104b) im Mobilfunknetz (102);
   Bestimmen, auf Basis der topologischen Daten, für jede Zelle, eines oder mehrerer Merkmale der Entfernung zwischen Standorten auf Basis der Entfernung zwischen der Basisstation (104a, 104b), die die Zelle bereitstellt, und einer oder mehrerer anderer Basisstationen (104a, 104b) in der Zelle;
   wobei das Bündeln von Zellen ferner auf den bestimmten Merkmalen der Entfernung zwischen Standorten für jede Zelle basiert.

10. Verfahren nach einem vorstehenden Anspruch, ferner umfassend das Markieren einer Zelle oder eines Zellclusters mit einer oder mehreren Diagnosemarkierungen auf Basis von Verbindungsdiagnosemerkmalen für Zellen in jedem Zellcluster;

    optional, sofern abhängig von Anspruch 3, ferner umfassend das Markieren einer Zelle als eine potenziell blockierte Zelle auf Basis eines oder mehrerer der folgenden:

       die maximale Verbindungsentfernung liegt unter einem Schwellenanteil der minimalen Entfernung zwischen Standorten;
       das Überschussverhältnis liegt unter einem Schwellenwert;
       die maximale Entfernung liegt unter einem Schwellenwert;

    optional, sofern abhängig von Anspruch 3, ferner umfassend das Markieren einer Zelle als potenziell schlecht gelegen, einen zusätzlichen benachbarten Zellstandort erfordernd oder eine Antennenneuausrichtung erfordernd, auf Basis eines oder mehrerer der folgenden:

       ein Überschussverhältnis liegt über einem Schwellenwert;
       eine modale Entfernung oder durchschnittliche Entfernung liegt über einem Schwellenwert;
       eine maximale Entfernung liegt über einem Schwellenwert.

11. Verfahren nach einem vorstehenden Anspruch, ferner umfassend das Bewerten der für die Zellcluster repräsentativen Daten, um Diagnosen hinsichtlich der Angemessenheit der von den Zellen im Zellcluster bereitgestellten Versorgung zu bestimmen, wobei das Bewerten eines oder mehrere umfasst von:

    Anwenden, mittels eines trainierten Klassifikators, von Diagnosemarkierungen auf die Zellen oder den Zellcluster zumindest auf Basis der Verbindungsdiagnosemerkmale für die Zellen;
    Bestimmen eines Diagnosewerts, der repräsentativ für die Angemessenheit der von den Zellen bereitgestellten Versorgung ist.

12. Verfahren nach einem vorstehenden Anspruch, ferner umfassend das Anzeigen der Zellen der Zellcluster als Überlagerung auf einer Karte.

13. Verfahren nach einem vorstehenden Anspruch, ferner umfassend das Vornehmen einer oder mehrerer der vorgeschlagenen Änderungen an der Konfiguration von Basisstationen (104a, 104b), die das Mobilfunknetz (102) bereitstellen, um die Angemessenheit der Versorgung des Mobilfunknetzes (102) zu verbessern; und
    Vergleichen einer Wahrscheinlichkeitsdichtefunktion für die betroffenen Zellen vor und nach dem Vornehmen der vorgeschlagenen Änderungen, um eine Verbesserung hinsichtlich der Angemessenheit der Versorgung des Mobilfunknetzes (102) zu bewerten.

14. Computereinrichtung (108), umfassend:

    eine Verarbeitungseinheit; und
    einen Speicher mit darauf gespeicherten Anweisungen, die bei Ausführung durch die Verarbeitungseinheit die Einrichtung (108) so konfigurieren, dass sie das Verfahren nach einem vorstehenden Anspruch durchführt.

15. Computerlesbares Speichermedium, wobei das computerlesbare Speichermedium Anweisungen beinhaltet, die bei Ausführung durch einen Computer veranlassen, dass der Computer das Verfahren nach einem der Ansprüche 1 bis 13 durchführt.

**Revendications**

1. Procédé pour une utilisation dans l'évaluation de la couverture fournie par des stations de base (104a, 104b) d'un réseau d'accès radio cellulaire (102), comprenant :

la réception, pour des cellules fournies par des stations de base (104a, 104b) d'un réseau d'accès radio (102), de données représentatives d'une métrique de connexion signalée par chaque station de base (104a, 104b) pour un équipement utilisateur (106a à i) ayant une connexion établie à l'une des stations de base (104a, 104b), la métrique de connexion étant collectée sur une période d'opération du réseau d'accès radio (102) pour toutes les connexions, les données de métrique de connexion collectées pour chaque station de base (104a, 104b) indiquant une distribution de connexions sur toute la zone de la couverture pour cette station de base (104a, 104b) ;

la génération, pour chaque cellule, de données représentatives d'une distribution de fréquence normalisée de la métrique de connexion entre la station de base (104a, 104b) et l'équipement utilisateur (106a à i) connecté à la station de base (104a, 104b) sur la période d'opération, la distribution de fréquence normalisée représentant une fonction de densité de probabilité pour la métrique de connexion ;

la détermination, pour chaque cellule, d'un ensemble de particularités de diagnostic de connexion à partir de la fonction de densité de probabilité de la métrique de connexion, les particularités de diagnostic de connexion étant sélectionnées pour indiquer des caractéristiques de la distribution de la métrique de connexion dans la zone de couverture fournie par les cellules ;

**caractérisé en ce qu'**il comprend en outre :

à l'aide d'un algorithme d'apprentissage automatique non supervisé, le regroupement de cellules sur la base des particularités de diagnostic de connexion déterminées pour les cellules en grappes de distributions similaires de la métrique de connexion, les données représentatives des grappes de cellules étant évaluées pour déterminer un diagnostic pour l'adéquation de la couverture fournie par les cellules dans la grappe de cellules ; et

la détermination, sur la base de l'évaluation des grappes de cellules, d'un ou de plusieurs changements suggérés de la configuration de stations de base (104a, 104b) fournissant le réseau d'accès radio (102) pour améliorer l'adéquation de la couverture du réseau d'accès radio (102).

2. Procédé selon la revendication 1, comprenant en outre :

la réception de données représentatives d'une ou de plusieurs autres métriques de connexion différentes, chaque métrique de connexion indiquant une qualité différente des connexions telles qu'elles sont distribuées dans toute la zone de couverture pour une station de base (104a, 104b) ;

la génération d'une distribution de fréquence normalisée pour chaque métrique de connexion pour chaque cellule, représentative d'une fonction de densité de probabilité pour cette métrique ;

la détermination, pour chaque cellule, d'un ensemble de particularités de diagnostic de connexion à partir de la fonction de densité de probabilité pour chaque métrique de connexion ;

dans lequel le regroupement des cellules à l'aide d'un algorithme d'apprentissage automatique non supervisé est basé sur les particularités de diagnostic de connexion déterminées sur la base de chaque métrique de connexion.

3. Procédé selon la revendication 1 ou 2, dans lequel la ou chaque métrique de connexion est représentative de l'un parmi :

un retard de propagation pour des signaux reçus au niveau des stations de base (104a, 104b) à partir de l'équipement utilisateur (106a à i) ayant une connexion établie à l'une des stations de base (104a, 104b) ;

une perte de trajet pour des signaux reçus au niveau des stations de base (104a, 104b) à partir de l'équipement utilisateur (106a à i) ayant une connexion établie à l'une des stations de base (104a, 104b) ;

une marge de puissance disponible pour des connexions à un équipement utilisateur (106a à i) ayant une connexion établie à l'une des stations de base (104a, 104b) ;

une puissance de transmission pour des connexions à un équipement utilisateur (106a à i) ayant une connexion établie à l'une des stations de base (104a, 104b) ;

un rapport signal sur bruit pour des connexions à un équipement utilisateur (106a à i) ayant une connexion établie à l'une des stations de base (104a, 104b) ;

une interférence pour des connexions à un équipement utilisateur (106a à i) ayant une connexion établie à l'une des stations de base (104a, 104b).

4. Procédé selon la revendication 3, comprenant en outre :

si des données représentatives d'un retard de propagation sont reçues, la conversion, pour chaque cellule fournie par les stations de base (104a, 104b), des données représentatives d'un retard de propagation en une distance entre la station de base (104a, 104b) et l'équipement utilisateur (106a à i) connecté ;

la génération, pour chaque cellule, de données représentatives d'une distribution de fréquence normalisée de la distance de connexion entre la station de base (104a, 104b) et l'équipement utilisateur (106a à i) connecté à la station de base (104a, 104b) sur la période d'opération, la distribution de fréquence normalisée représentant une fonction de densité de probabilité pour la distance de connexion jusqu'à l'équipement utilisateur (106a à i) dans la cellule ;

éventuellement dans lequel les données représentatives d'un retard de propagation comprennent une avance de minutage signalée par les stations de base (104a, 104b) pour l'équipement utilisateur (106a à i) connecté à la station de base (104a, 104b).

5. Procédé selon l'une quelconque des revendications précédentes, dans lequel les données reçues représentatives d'une métrique de connexion sont mises en compartiments, et dans lequel la génération de la distribution de fréquence normalisée comprend :
l'allocation aléatoire de chaque donnée de métrique de connexion reçue à une valeur non mise en compartiment dans la plage de son compartiment respectif.

6. Procédé selon l'une quelconque des revendications précédentes, dans lequel la détermination, pour chaque cellule, d'un ensemble de particularités de diagnostic de connexion à partir de la fonction de densité de probabilité de la métrique de connexion comprend la détermination d'une ou de plusieurs parmi :

la détermination, à partir de la fonction de densité de probabilité, d'une valeur de métrique de connexion modale à laquelle un maximum se produit dans la fonction de densité de probabilité ;

la détermination, à partir de la fonction de densité de probabilité, d'une ou de plusieurs valeurs de métrique de connexion dans lesquelles une connexion est susceptible de se produire à une probabilité donnée à partir de la fonction de densité de probabilité ;

la détermination, à partir de la fonction de densité de probabilité, d'une valeur de métrique de connexion médiane à laquelle une connexion est susceptible de se produire avec une probabilité de 50 % ;

la détermination, à partir de la fonction de densité de probabilité, d'une valeur de métrique de connexion hors bande en tant que différence entre la valeur de métrique de connexion seuil dans laquelle une connexion est susceptible de se produire à une probabilité seuil donnée et une valeur de métrique de connexion maximale dans laquelle une connexion est susceptible de se produire à une probabilité maximale ;

la détermination d'un rapport hors bande en tant que rapport entre la valeur de métrique de connexion hors bande et la valeur de métrique de connexion seuil ;

éventuellement dans lequel la probabilité seuil est de 90 % et dans lequel la probabilité maximale est de 99 %.

7. Procédé selon l'une quelconque des revendications précédentes, dans lequel une ou plusieurs des particularités de diagnostic de connexion déterminées à partir de la fonction de densité de probabilité de la métrique de connexion sont des statistiques suffisantes résumant l'ensemble des informations dans les données représentatives de la métrique de connexion pour les signaux reçus au niveau des stations de base concernant un paramètre de population que les statistiques représentent.

8. Procédé selon l'une quelconque des revendications précédentes, dans lequel les données représentatives de la métrique de connexion sont reçues pour de multiples bandes différentes desservies dans chaque cellule, et dans lequel une fonction de densité de probabilité et un ensemble de particularités de diagnostic de connexion sont générés pour chaque bande séparément, les cellules étant regroupées pour chaque bande desservie par cette cellule séparément, sur la base des ensembles de particularités de diagnostic de connexion générés pour chaque bande ;

éventuellement comprenant en outre la comparaison des grappes de cellules pour chaque bande desservie par une cellule pour identifier des cellules ayant des caractéristiques de couverture différentes pour des bandes différentes dans la même cellule, indiquant que la station de base peut être configurée différemment pour des bandes différentes dans la même cellule ; éventuellement comprenant en outre la détermination d'un chevauchement entre les fonctions de densité de probabilité générées pour chaque bande dans la même cellule, et la détermination d'un ou de plusieurs changements suggérés de la configuration de la station de base pour optimiser l'équilibrage de charge entre des bandes différentes dans la même cellule ; éventuellement dans lequel les données représentatives d'une métrique de connexion sont reçues pour de multiples bandes différentes desservies dans chaque cellule sur des technologies d'accès radio, RAT, différentes prises en charge par les stations de base (104a, 104b), le procédé comprenant éventuellement en outre la détermination d'un chevauchement entre les fonctions de densité de probabilité générées pour chaque bande de technologies d'accès radio différentes dans la même cellule pour identifier des cellules ayant des caractéristiques de couverture différentes pour des technologies d'accès radio différentes dans la même cellule, indiquant que l'équipement utilisateur dans la cellule peut connaître des problèmes de connexion avec un repli sur des technologies d'accès radio différentes.

9. Procédé selon l'une quelconque des revendications précédentes, comprenant en outre :

la réception de données topologiques comportant des informations d'emplacement pour les stations de base (104a, 104b) dans le réseau d'accès radio (102) ;

la détermination, sur la base de données topologiques, pour chaque cellule, d'une ou de plusieurs particularités de distance inter-sites sur la base de la distance entre la station de base (104a, 104b) fournissant la cellule, et une ou plusieurs autres stations de base (104a, 104b) situées dans la cellule ;

dans lequel le regroupement de cellules est en outre basé sur les particularités de distance inter-sites déterminées pour chaque cellule.

10. Procédé selon l'une quelconque des revendications précédentes, comprenant en outre le marquage d'une cellule ou d'une grappe de cellules avec un ou plusieurs marqueurs diagnostiques sur la base de particularités de diagnostic de connexion pour des cellules dans chaque grappe de cellules ;

éventuellement, en dépendance avec la revendication 3, comprenant en outre le marquage d'une cellule en tant cellule bloquée potentielle sur la base d'un ou de plusieurs parmi :

le fait que la distance de connexion maximale est inférieure à une proportion seuil de la distance inter-sites minimale ;
le fait que le rapport hors bande est inférieur à une valeur seuil ;
le fait que la distance maximale est inférieure à une valeur seuil ;

éventuellement, en dépendance avec la revendication 3, comprenant en outre le marquage d'une cellule comme étant potentiellement mal située, nécessitant un site de cellule voisin supplémentaire, ou nécessitant un réalignement d'antenne sur la base d'un ou de plusieurs parmi :

le fait qu'un rapport hors bande est supérieur à une valeur seuil ;
le fait qu'une distance modale ou une distance médiane est supérieure à une valeur seuil ;
le fait qu'une distance maximale est supérieure à une valeur seuil.

11. Procédé selon l'une quelconque des revendications précédentes, comprenant en outre l'évaluation des données représentatives des grappes de cellules pour déterminer un diagnostic pour l'adéquation de la couverture fournie par les cellules dans la grappe de cellules, l'évaluation comprenant une ou plusieurs parmi :

l'utilisation d'un classificateur entraîné pour appliquer des marqueurs diagnostiques aux cellules ou à la grappe de cellules sur la base d'au moins les particularités de diagnostic de connexion pour les cellules ;
la détermination d'un score de diagnostic représentatif de l'adéquation de la couverture fournie par les cellules.

12. Procédé selon l'une quelconque des revendications précédentes, comprenant en outre l'affichage des cellules des grappes de cellules en superposition sur une carte.

13. Procédé selon l'une quelconque des revendications précédentes, comprenant en outre l'apport d'un ou de plusieurs des changements suggérés à la configuration des stations de base (104a, 104b) fournissant le réseau d'accès radio (102) pour améliorer l'adéquation de la couverture du réseau d'accès radio (102) ; et

la comparaison d'une fonction de densité de probabilité pour les cellules affectées avant et après l'apport des changements suggérés pour évaluer une amélioration de l'adéquation de la couverture du réseau d'accès radio (102).

14. Appareil informatique (108) comprenant :

un processeur ; et
une mémoire stockant des instructions qui, lorsqu'elles sont exécutées par le processeur, configurent l'appareil (108) pour réaliser le procédé de l'une quelconque des revendications précédentes.

15. Support de stockage lisible par ordinateur, le support de stockage lisible par ordinateur comportant des instructions qui, lorsqu'elles sont exécutées par un ordinateur, amènent l'ordinateur à réaliser le procédé de l'une quelconque des revendications 1 à 13.

110b

110a

106h

106i

106d

106e

106f

106c

106a

106b

106g

BASE
STATION
104a

108

BASE
STATION
104b

102

COVERAGE
EVALUATION
APPARATUS

Fig. 1

Fig. 2

300

RECEIVE DATA REPRESENTATIVE OF A PROPAGATION DELAY
302

CONVERT THE PROPAGATION DELAY TO A
DISTANCE BETWEEN THE BASE STATION AND THE
CONNECTED USER EQUIPMENT 304

GENERATE A NORMALISED FREQUENCY DISTRIBUTION OF THE
CONNECTION DISTANCES REPRESENTING A PROBABILITY
DENSITY FUNCTION 306

DETERMINE, FOR EACH CELL, A SET OF CONNECTION
DIAGNOSTIC FEATURES FROM THE PROBABILITY
DENSITY FUNCTION 308

CLUSTER CELLS BASED ON THE CONNECTION
DIAGNOSTIC FEATURES INTO CLUSTERS OF SIMILAR
DISTRIBUTIONS OF THE CONNECTION DISTANCES 310

DETERMINE ONE OR MORE SUGGESTED CHANGES TO THE
CONFIGURATION OF BASE STATIONS PROVIDING THE RADIO
ACCESS NETWORK TO IMPROVE THE ADEQUACY OF
THE COVERAGE OF THE RADIO ACCESS NETWORK 312

Fig. 3

EP 4 541 065 B1

L21_L0002

104d

L21_LK4518

104c

L21_LK4517

L21_L0001_01

104a

104b

Fig. 4

| Cluster | Count of Cells | Alex | Cairo | Canal | Delta | Giza | Upper | Traffic Local Maxima (m) | Median (m) | 90th Percentle (m) | Distance 90to99 (m) | Overspilling Ratio |
|---|---|---|---|---|---|---|---|---|---|---|---|---|
| 0 | 1093 | 149 | 65 | 77 | 298 | 62 | 439 | 2490 | 2947 | 6197 | 6544 | 1.1 |
| 1 | 15675 | 1485 | 4588 | 2747 | 560 | 3453 | 2819 | 344 | 418 | 919 | 726 | 0.8 |
| 2 | 1673 | 230 | 293 | 445 | 70 | 195 | 436 | 688 | 800 | 2409 | 9127 | 3.8 |
| 3 | 3599 | 308 | 683 | 419 | 386 | 387 | 1309 | 1011 | 1333 | 3228 | 1828 | 0.6 |
| 4 | 705 | 159 | 52 | 122 | 66 | 38 | 261 | 4908 | 5140 | 9719 | 3507 | 0.4 |
| 5 | 1152 | 248 | 95 | 231 | 87 | 78 | 403 | 1684 | 3555 | 11406 | 2706 | 0.2 |
| 6 | 2413 | 314 | 268 | 332 | 322 | 215 | 958 | 969 | 1559 | 5933 | 6344 | 1.1 |
| 7 | 10 | 2 | | 8 | | | | 14348 | 18045 | 43943 | 7792 | 0.2 |
| 8 | 199 | 61 | 2 | 57 | 1 | 5 | 68 | 10623 | 9295 | 13543 | 1868 | 0.1 |
| 9 | 684 | 57 | 104 | 78 | 117 | 42 | 286 | 2510 | 2612 | 4572 | 1927 | 0.4 |
| 10 | 3733 | 432 | 684 | 507 | 265 | 546 | 1299 | 528 | 652 | 1860 | 3710 | 2.0 |

Fig. 5

EP 4 541 065 B1

Fig. 6

Fig. 7

Fig. 8

Fig. 9

Fig. 10

Fig. 11A

Sector 1568_1 Traffic Distribution Of all bands

Fig. 11B

Sector GJ1019_1 Traffic Distribution

Fig. 12

| Cluster ID | Initial Label | Count of Cells | Alex | Cairo | Canal | Delta | Giza | Upper | Traffic Local Maxima (m) | 90th Percentile (m) | Distance 90to99 (m) | Traffic/Intersite Distance |
|---|---|---|---|---|---|---|---|---|---|---|---|---|
| 0 | Normal | 20032 | 2322 | 5996 | 2931 | 853 | 3842 | 4088 | 366 | 1006 | 721 | 0.7 |
| 1 | High Overshooting, moderate location | 3004 | 319 | 297 | 387 | 456 | 199 | 1346 | 1000 | 5463 | 6541 | 2.0 |
| 2 | Roads/Coastal | 231 | 41 | 4 | 90 | | 4 | 92 | 10703 | 14123 | 1213 | 1.2 |
| 3 | Bad location, rural profile | 3326 | 266 | 475 | 320 | 579 | 277 | 1409 | 1685 | 3849 | 1809 | 0.9 |
| 4 | Overshooting, moderate location | 5943 | 520 | 1064 | 685 | 572 | 722 | 2380 | 571 | 2198 | 3342 | 1.4 |
| 5 | Severe Overshooting, moderate location | 1949 | 247 | 334 | 521 | 96 | 179 | 572 | 714 | 2407 | 9256 | 3.3 |
| 6 | Roads Profile | 945 | 191 | 62 | 193 | 130 | 38 | 331 | 4927 | 9831 | 3365 | 1.3 |
| 7 | High Overshooting, Bad location | 1595 | 256 | 151 | 384 | 142 | 95 | 567 | 1566 | 11282 | 2876 | 2.3 |
| 8 | Serving Road sites | 1429 | 173 | 72 | 127 | 438 | 48 | 571 | 2634 | 6139 | 6268 | 1.4 |

Fig. 13

EP 4 541 065 B1

1400

RECEIVE DATA REPRESENTATIVE OF A CONNECTION METRIC 1402

GENERATE A NORMALISED FREQUENCY DISTRIBUTION OF THE CONNECTION METRIC REPRESENTING A PROBABILITY DENSITY FUNCTION 1404

DETERMINE, FOR EACH CELL, A SET OF CONNECTION DIAGNOSTIC FEATURES FROM THE PROBABILITY DENSITY FUNCTION 1406

CLUSTER CELLS BASED ON THE DETERMINED CONNECTION DIAGNOSTIC FEATURES INTO CLUSTERS OF SIMILAR DISTRIBUTIONS OF THE CONNECTION METRIC 1408

DETERMINE ONE OR MORE SUGGESTED CHANGES TO THE CONFIGURATION OF BASE STATIONS TO IMPROVE THE ADEQUACY OF THE COVERAGE OF THE RADIO ACCESS NETWORK 1410

Fig. 14

| Cluster ID | Count of CELL_NAME | Alexandria | Cairo | Delta | Giza | L09 | L18 | L21 | PL User Local Maxima | PL User 90th Percentile | PL User Delta 90to99 | PL User Percentiles STD |
|---|---|---|---|---|---|---|---|---|---|---|---|---|
| 0 | 8373 | 609 | 1326 | 5483 | 943 | 1818 | 6400 | 155 | 135.1 | 140.4 | 3.6 | 6.8 |
| 1 | 2823 | 128 | 1153 | 1175 | 365 | 211 | 93 | 2519 | 108.9 | 125.5 | 13 | 12.5 |
| 2 | 4881 | 390 | 1620 | 2273 | 592 | 3218 | 511 | 1152 | 127.1 | 133.3 | 4.9 | 10 |
| 3 | 760 | 40 | 407 | 186 | 126 | 158 | 64 | 538 | 95 | 114.8 | 17.5 | 13.8 |
| 4 | 5404 | 521 | 1543 | 2567 | 765 | 4435 | 877 | 92 | 126.4 | 131.2 | 3.8 | 5.7 |
| 5 | 5745 | 357 | 1047 | 3738 | 597 | 238 | 293 | 5214 | 114 | 135.3 | 7.5 | 12.6 |
| 6 | 5944 | 339 | 1208 | 3774 | 618 | 652 | 3235 | 2057 | 134.1 | 139.9 | 4.6 | 10.5 |
| 7 | 3875 | 305 | 1442 | 1394 | 730 | 1334 | 1312 | 1229 | 130.5 | 136.1 | 5.3 | 14 |
| 8 | 2831 | 204 | 1237 | 768 | 617 | 552 | 360 | 1919 | 104.4 | 131.7 | 8.3 | 14.7 |

Fig. 15

Fig. 16

Sector 0036_1 Pathloss Distribution

602
604
606

Band
LTE_2100
LTE_1800
LTE_900

Fig. 17

| Cluster ID | L09 | L18 | L21 | L26 | Count Of Cells | Traffic Local Maxima % | TA 90th Percentile % | PL User Local Maxima | PL User 90th Percentile |
|---|---|---|---|---|---|---|---|---|---|
| 0 | 4995 | 1605 | 6330 | 1946 | 14876 | 554.0 | 1936.5 | 120.6 | 131.7 |
| 1 | 1349 | 382 | 783 | 25 | 2539 | 266.8 | 882.3 | 97.1 | 120.3 |
| 2 | 2189 | 1679 | 1613 | 90 | 5571 | 2676.6 | 8272.7 | 127.6 | 138.4 |
| 3 | 2066 | 901 | 4170 | 530 | 7667 | 361.0 | 1253.3 | 111.3 | 126.9 |
| 4 | 3759 | 6279 | 2591 | 169 | 12798 | 733.3 | 2473.9 | 127.4 | 137.0 |
| 5 | 168 | 64 | 75 | 1 | 308 | 10523.5 | 14086.4 | 129.9 | 141.0 |

Fig. 18

**REFERENCES CITED IN THE DESCRIPTION**

**Patent documents cited in the description**

- US 10542330 B2

**Non-patent literature cited in the description**

- **R. CHÁVES-SANTIAGO et al.** Enhanced efficiency and frequency assignment by optimizing the base stations location in a mobile radio network. *Wireless Networks*, 04 January 2007